# EUROPÄISCHE PATENTSCHRIFT

(11) **EP 3 161 526 B1**
(45) Veröffentlichungstag und Bekanntmachung des Hinweises auf die Patenterteilung: **15.09.2021**
(21) Anmeldenummer: 15738851.3
(22) Anmeldetag: 25.06.2015
(51) Int. Cl.: G01V 3/15, G01C 15/02

(54) **ORTUNGSGERÄT UND VERFAHREN ZUM BETRIEB EINES ORTUNGSGERÄTS**
LOCATING DEVICE AND METHOD OF OPERATING A LOCATING DEVICE
APPARAEIL DE LOCALISATION ET PROCÉDÉ D'OPÉRATION D'UN APPARAEIL DE LOCALISATION

(30) Priorität: 25.06.2014 DE 102014212131
(43) Veröffentlichungstag der Anmeldung: 03.05.2017
(73) Patentinhaber: Robert Bosch GmbH, 70442 Stuttgart (DE)
(72) Erfinder: SGARZ, Heiko, 71229 Leonberg (DE); BROSI, Jan-Michael, 70771 Leinfelden-Echterdingen (DE); ZIBOLD, Tobias, 70567 Stuttgart (DE); AMANN, Christian, 70199 Stuttgart (DE); JACKISCH, Sebastian, 71636 Ludwigsburg (DE)
(86) Internationale Anmeldenummer: PCT/EP2015/064430
(87) Internationale Veröffentlichungsnummer: WO 2015/197779

(56) Entgegenhaltungen:
- WO-A1-03/067284
- DE-A1-102011 079 258
- US-A1- 2007 063 688

## Beschreibung

### Stand der Technik

In DE 10 2006 025 861 A1 ist bereits ein Ortungsgerät zur Ortung von Objekten in einem Untersuchungsgegenstand vorgeschlagen worden, das in Verbindung mit einer Ausgabeeinheit zur Ausgabe einer Information anhand einer Bewegungskenngröße vorgesehen ist.

### Offenbarung der Erfindung

Die Erfindung geht aus von einem bildgebenden Ortungsgerät, insbesondere einem handgehaltenen Ortungsgerät, mit zumindest einer ersten Ortungsvorrichtung, die dazu vorgesehen ist, Ortungsdaten zu unter einer Untersuchungsoberfläche verborgenen Ortungsobjekten zu erfassen, einem Positionssensor zur Erfassung von Positionsdaten des Ortungsgeräts bezogen auf die Untersuchungsoberfläche, einer Auswertevorrichtung, die dazu vorgesehen ist, durch Zuordnung von Ortungsdaten einer ersten Kategorie der ersten Ortungsvorrichtung zu Positionsdaten eine erste zumindest zweidimensionalen Karteninformation zu bestimmen. Der Positionssensor ist darüber hinaus dazu vorgesehen, auch die Ausrichtung des Positionssensors und somit des Ortungsgeräts bezogen auf die Untersuchungsoberfläche zu bestimmen. Die Auswertevorrichtung ist dazu vorgesehen, zumindest eine weitere, von der ersten zumindest zweidimensionalen Karteninformation unterschiedliche zumindest zweidimensionale Karteninformation zu bestimmen. Das Ortungsgerät weist zumindest eine Anzeigevorrichtung auf, die dazu vorgesehen ist, die erste zumindest zweidimensionale Karteninformation und/oder die zumindest eine weitere zumindest zweidimensionale Karteninformation als Karte darzustellen, wobei die Anzeigevorrichtung dazu vorgesehen ist, die erste zumindest zweidimensionale Karteninformation und die zumindest eine weitere zumindest zweidimensionale Karteninformation zu einer gemeinsamen Karte zu überlagern.

Es wird vorgeschlagen, dass die Anzeigevorrichtung dazu vorgesehen ist, die dargestellte Karte bei einer Drehung des Ortungsgeräts auf der Untersuchungsoberfläche entgegen der Richtung der Drehbewegung zu rotieren, sodass die dargestellte Karte auch unter Drehung des Ortungsgeräts die unter der Untersuchungsoberfläche georteten Ortungsobjekte unabhängig von der Orientierung auf der Untersuchungsoberfläche lagegetreu wiedergibt.

Das bildgebende Ortungsgerät, insbesondere ein handgehaltenes Ortungsgerät, ist dazu vorgesehen, eine Ortung von unter einer Untersuchungsoberfläche verborgenen Ortungsobjekten zu ermöglichen. Bevorzugt werden dabei die Ortung von unter einer Untersuchungsoberfläche verborgenen Ortungsobjekten betreffende Ortungsdaten bei einem Ortungsvorgang oder daran anschließend in Form einer aufbereiteten, auf einfache Weise durch den Benutzer interpretierbaren Karte an den Benutzer des Geräts ausgegeben. Während eines Ortungsvorgangs wird das Ortungsgerät bevorzugt über ein zu untersuchendes Werkstück, insbesondere dessen Untersuchungsoberfläche, bewegt oder verfahren und somit umpositioniert.

Unter einer Untersuchungsoberfläche ist insbesondere eine Oberfläche eines hinsichtlich verborgener Ortungsobjekte zu untersuchenden Gegenstands oder Werkstücks zu verstehen. Beispielsweise und nicht abschließend kann es sich bei dem Werkstück um Baustoffe, eine Wand, einen Boden, eine Decke, Estrich, ein organisches Gebilde (insbesondere auch Teile eines Körpers) und/oder Teile eines Geländes handeln. Bestehen kann der Gegenstand oder das Werkstück beispielsweise insbesondere aus Holz, Glas, Kunststoff, Beton, Stein, Ziegel, Gips, Metall, organischen Materialien oder dergleichen. Des Weiteren lassen sich prinzipiell auch Flüssigkeiten untersuchen. Einschlüsse eines Materials, das sich von dem Material des zu untersuchenden Gegenstands unterscheidet oder dessen physikalischen Eigenschaften sich von denen des Materials des zu untersuchenden Gegenstands unterscheiden, stellen beispielhafte Ortungsobjekte dar. Typische Beispiele für derartige Ortungsobjekte sind Stromleitungen, Rohre, Gasleitungen, Hohlräume, Armierung oder dergleichen, die in einer Gebäudewand verborgen liegen.

Das bildgebende Ortungsgerät, insbesondere ein handgehaltenes Ortungsgerät, weist zumindest eine erste Ortungsvorrichtung auf, die dazu vorgesehen ist, Ortungsdaten zu unter einer Untersuchungsoberfläche verborgenen Ortungsobjekten zu erfassen. Prinzipiell dient eine Ortungsvorrichtung, insbesondere die erste Ortungsvorrichtung, somit der Ortung von unter einer Untersuchungsoberfläche verborgenen Ortungsobjekten. Vorzugsweise ist bei der Ortung ein direkter, insbesondere taktiler Kontakt zwischen einer Ortungsvorrichtung, insbesondere der ersten Ortungsvorrichtung, und einem zu ortenden Ortungsobjekt nicht nötig.

Unter einer Ortungsvorrichtung, insbesondere unter der ersten Ortungsvorrichtung, soll insbesondere eine Vorrichtung verstanden werden, die Mittel aufweist, die dazu vorgesehen sind, physikalische und/oder chemische Größen, die auf ein Vorhandensein eines Ortungsobjekts schließen lassen, zu erfassen und in ein elektrisch auswertbares Signal umzuwandeln. Bevorzugt ist eine Ortungsvorrichtung, insbesondere die erste Ortungsvorrichtung, dazu vorgesehen, mittels Auswertung einer elektrischen und/oder magnetischen Feldänderung oder einer Laufzeitänderung einer in ein zu untersuchendes Material ausgestrahlten Strahlung, in einem Untersuchungsgegenstand verborgene Ortungsobjekte zu detektieren. Insbesondere schließt eine Ortungsvorrichtung, insbesondere die erste Ortungsvorrichtung, zum Betrieb der Mittel notwendige Komponenten, elektrische Schaltungen und dergleichen ein. Bevorzugt weisen die Mittel einer Ortungsvorrichtung, insbesondere der ersten Ortungsvorrichtung, einen Ortungssensor aus einer Gruppe von Sensoren auf, die zumindest einen Induktivsensor, einen AC-Sensor, einen Kapazitivsensor oder dergleichen umfasst. Insbesondere eignen sich Ortungssensoren, die für eine Erfassung mittels elektromagnetischer Strahlung vorgesehenen sind, wie beispielsweise ein 50-Hertz-Sensor, ein Mikrowellensensor, ein Radarsensor, ein Terahertzsensor, ein Ultrahochfrequenzsensor, ein Röntgensensor, ein Infrarotsensor oder ein NMR-Sensor. Ferner sind auch Schallsensoren, beispielsweise Ultraschall- oder Impact-Echo-Sensoren, oder Neutronensonden als Ortungssensor denkbar.

Insbesondere erfasst ein Ortungssensor an einer Position (xₙ,yₙ) bezogen auf die Untersuchungsoberfläche einen oder mehrere Rohwerte S_{k,n}, wobei der Index k verschiedene Sensorwerte des Ortungssensors kennzeichnet und der Index n die Zugehörigkeit des Rohwerts zu der Position kennzeichnet. Die Position (xₙ,yₙ) wird von dem Positionssensor erfasst. Die Positionsdaten stellen dabei zweidimensionale Koordinaten in einer Ebene, insbesondere in der Ebene der Untersuchungsoberfläche, dar. Es ist aber auch denkbar, dass es sich um dreidimensionale Koordinaten handelt. Die Positionsdaten können in Form eines Rasters mit äquidistanten Abständen gleichmäßig über die Untersuchungsoberfläche verteilt sein, oder, einem beliebigen Verfahrweg folgend, ungleichmäßig über die Untersuchungsoberfläche verteilt sein. Die Ortungsvorrichtung, insbesondere die zum Betrieb der Ortungsvorrichtung vorgesehenen Mittel der Ortungsvorrichtung, berechnen aus den Rohwerten S_{k,n} des Ortungssensors Sensorwerte S_{m,n}. Im einfachsten Fall erfolgt die Berechnung durch identische Abbildung, in komplexeren Fällen durch lineare Abbildungen wie Summenbildung, Differenzbildung, Gewichtung, oder auch nichtlineare Abbildung wie Zuweisung von Klassen. Diese Sensorwerte stellen die im Rahmen dieses Patents genannten Ortungswerte einer Ortungsvorrichtung dar. Der Index m kennzeichnet Ortungsdaten unterschiedlicher Kategorie, wie im Folgenden noch genauer ausgeführt wird.

Unter "vorgesehen" soll insbesondere speziell "programmiert", "ausgelegt" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Unter einem handgehaltenen Ortungsgerät soll insbesondere verstanden werden, dass das Ortungsgerät ohne Zuhilfenahme einer Transportmaschine lediglich mit den Händen, insbesondere mit einer Hand, transportiert werden kann. Insbesondere kann das Ortungsgerät auch während eines Ortungsvorgangs in einer von einem Benutzer des Ortungsgeräts frei ausgeführten Bewegung, insbesondere einer entlang zweier Richtungen freien Bewegung, handgehalten über die Untersuchungsoberfläche geführt werden. Unter einer freien Bewegung ist insbesondere eine Bewegung zu verstehen, die unabhängig ist von einem vorgegebenen Raster oder einer vorgegebenen Spur für die Umpositionierung des Ortungsgeräts, insbesondere für eine Bewegung oder einen Verfahrweg des Ortungsgeräts.

Unter "Umpositionierung" ist insbesondere ein in beliebiger Richtung durchgeführtes Verfahren, Bewegen, Verschieben, Rotieren, Drehen oder ein anderweitiges Ändern der Position und/oder der Ausrichtung des Ortungsgeräts in Bezug auf die Untersuchungsoberfläche zu verstehen.

Ein erfindungsgemäßes handgehaltenes Ortungsgerät weist bevorzugt ein Gehäuse auf, das zumindest die wesentlichen funktionalen Komponenten des Ortungsgeräts aufnimmt. Insbesondere nimmt das Gehäuse zumindest eine Steuervorrichtung, die erste Ortungsvorrichtung, einen Positionssensor, eine Auswertevorrichtung, eine Eingabe- und/oder eine Ausgabevorrichtung, insbesondere eine Anzeigevorrichtung, sowie eine Energieversorgungsvorrichtung auf. Insbesondere sind die Komponenten in ihrem Gesamtvolumen zu mehr als 50 %, bevorzugt zu mehr als 75 % und besonders bevorzugt zu 100 % in dem Gehäuse des Ortungsgeräts untergebracht. Vorzugsweise kann das handgehaltene Ortungsgerät einen Griff oder einen Griffbereich aufweisen, mit dem das Ortungsgerät über die Untersuchungsoberfläche des zu untersuchenden Gegenstands geführt werden kann. Die Masse des handgehaltenen Ortungsgeräts beträgt insbesondere weniger als 5 kg, vorteilhaft weniger als 3 kg und besonders vorteilhaft weniger als 1 kg. Auf diese Weise kann ein besonders kompaktes Ortungsgerät in Form eines leicht einhändig durch einen Benutzer führbaren Ortungsgeräts realisiert werden. Ferner lassen sich die Komponenten des Ortungsgeräts auf diese Weise vorteilhaft durch das Gehäuse des Ortungsgeräts vor Beschädigungen und Umwelteinflüssen, beispielsweise vor dem Eindringen von Feuchtigkeit und Staub, schützen.

Das Ortungsgerät, bevorzugt das handgehaltene Ortungsgerät, weist einen Positionssensor zur Erfassung von Positionsdaten des Ortungsgeräts bezogen auf die Untersuchungsoberfläche auf. Unter einem Positionssensor ist insbesondere eine Vorrichtung zu verstehen, die dazu vorgesehen ist, eine Feldänderung, eine Laufzeitänderung und/oder eine Phasenlage in ein elektrisch auswertbares Signal umzuwandeln und eine gegenwärtige Position des Positionssensors und somit des Ortungsgeräts bezogen auf die Untersuchungsoberfläche auszugeben oder zu übermitteln. Die gegenwärtige Position kann dabei relativ zu einer früheren Position oder absolut, insbesondere bezogen auf zumindest einen festen Bezugspunkt, erfasst und als Positionsdaten ausgegeben oder übermittelt werden. Unter einem Bezugspunkt soll ein relativ zur Untersuchungsoberfläche fest angeordneter Punkt verstanden werden, beispielsweise ein durch ein Markierungselement des Ortungsgeräts festgelegter Punkt oder ein markanter Punkt an einem Übergang der Untersuchungsoberfläche zu einer anderen Fläche, beispielsweise einer Gebäudeteiloberfläche. Beispielsweise kann ein derartiger Bezugspunkt an einer von einem Boden und einer Wand gebildeten Kante definiert sein. Weiter ist es denkbar, dass der Positionssensor zu einer Positionsbestimmung mittels einer externen Referenz, beispielsweise stationären Sendern und/oder Satelliten, vorgesehen ist. Alternativ ist ferner denkbar, dass der Positionssensor dazu vorgesehen ist, für einen Ortungsvorgang Positionsdaten unabhängig von einem Bezugspunkt auf der Untersuchungsfläche rein relativ zu erfassen.

Der Positionssensor kann in unterschiedlichen Ausführungsformen bereitgestellt werden. In einer Ausführungsform kann der Positionssensor beispielsweise als ein optischer und/oder mechanischer Wegstreckensensor ausgebildet sein, der in einem Betriebszustand eine Bewegung und/oder Drehung des Ortungsgeräts auf der Untersuchungsoberfläche erfasst. Insbesondere ist der optische und/oder mechanische Wegaufnehmer in der bei Anwendung des Ortungsgeräts der Untersuchungsoberfläche zugewandten Gehäuseseite des Ortungsgeräts angeordnet. Unter Verwendung eines optischen Wegaufnehmers kann vorteilhaft der Abstand zwischen Ortungsgerät und Untersuchungsoberfläche minimiert werden, wobei gleichzeitig die Ortungstiefe des Ortungsgeräts erhöht wird. Dabei bezeichnet die Ortungstiefe diejenige Entfernung in den Untersuchungsgegenstand hinein, bis zu der ein Ortungsobjekt noch durch das Ortungsgerät detektiert werden kann.

Alternativ oder zusätzlich kann der Positionssensor beispielsweise als ein abstandssensitiver Sensor ausgebildet und zu einer Entfernungsmessung zu zumindest einem Bezugspunkt mittels einer elektromagnetischen Strahlung, beispielsweise Laserlicht, Infrarot- oder Radarwellen, vorgesehen sein.

Alternativ oder zusätzlich kann der Positionssensor auch eine Kamera umfassen. Auf diese Weise kann eine leicht einrichtbare, besonders präzise, insbesondere absolute Positionsbestimmung bereitgestellt werden. Unter einer Kamera soll in diesem Zusammenhang eine Vorrichtung verstanden werden, die zu einer kontinuierlichen Erfassung von Bilddaten vorgesehen ist. Die Kamera kann als eine optische Kamera, als eine Infrarotkamera oder als eine Kamera für einen anderen Wellenlängenbereich ausgebildet sein. Bevorzugt ist die Kamera relativ zu der Untersuchungsoberfläche ortsfest angeordnet, beispielsweise auf einem Stativ, und dazu vorgesehen, eine Position des Ortungsgeräts auf der Untersuchungsoberfläche zu erfassen. Es ist denkbar, dass die Kamera eine einzelne optische Einheit oder eine Mehrzahl von optischen Einheiten aufweist, und beispielsweise als eine Stereokamera ausgebildet ist. Bevorzugt weist das Ortungsgerät in dieser Ausführungsform zumindest eine Markierung auf, die relativ zu der Ortungsvorrichtung, bevorzugt relativ zu deren Ortungssensor, räumlich fixiert ist. Die Markierung ist dazu vorgesehen ist, von dem Positionssensor, insbesondere der Kamera, erfasst zu werden. Unter einer Markierung soll in diesem Zusammenhang insbesondere ein Bereich verstanden werden, der eine von einer Umgebung des Bereichs verschiedene Oberfläche zur Erfassung durch den Positionssensor aufweist. Bevorzugt ist die Markierung zur Erfassung durch die Kamera vorgesehen. Bevorzugt weist die Oberfläche der Markierung hierfür eine von einer Umgebung der Markierung verschiedene Farbe, Struktur und/oder Reflexionseigenschaften entsprechend des Wellenlängenbereichs, in dem die Kamera empfindlich ist, auf. Besonders bevorzugt weist das Ortungsgerät eine Mehrzahl von Markierungen auf, die jeweils dazu vorgesehen sind, Positionsdaten zu liefern, wenn einige der Markierungen während des Ortungsvorgangs zumindest zeitweise für den Positionssensor, insbesondere die Kamera, verdeckt sind.

Es ist ein in dem Positionssensor integrierter Sensor zur Erfassung der gegenwärtigen Ausrichtung des Ortungsgeräts, bezogen auf die Untersuchungsoberfläche, vorgesehen. Beispielsweise kann hierfür eine Inertialsensorik vorgesehen sein, mittels der eine Drehung des Ortungsgeräts in beliebige Richtung detektiert und quantitativ ausgewertet werden kann.

Alternativ oder zusätzlich kann der Positionssensor auch auf anderen, einem Fachmann zweckmäßig erscheinenden Messverfahren beruhen, beispielsweise in Ausgestaltung eines Ultraschallsensors, eines barometrischen Sensors oder eines GPS-Sensors. Insbesondere kann der Positionssensor einen oder mehrere Sensoren aus einer Gruppe von Sensoren aufweisen, die zumindest neigungs-, winkel-, abstands-, translations-, beschleunigungs- sowie drehratensensitive Sensoren umfasst.

Die von dem Positionssensor ermittelten und ausgegebenen Positionsdaten betreffen zumindest Koordinaten in zwei Richtungen, die die Position des Positionssensors und damit des Ortungsgeräts auf der Untersuchungsoberfläche bestimmen. Der Positionssensor ist darüber hinaus dazu vorgesehen, auch die Ausrichtung des Positionssensors und somit des Ortungsgeräts bezogen auf die Untersuchungsoberfläche zu bestimmen. In diesem Fall umfassen die Positionsdaten auch Daten, die die Ausrichtung des Ortungsgeräts bezogen auf die Untersuchungsoberfläche beschreiben.

Das Ortungsgerät weist ferner eine Steuervorrichtung zur Ansteuerung der funktionalen Komponenten des Ortungsgeräts auf, insbesondere zur Ansteuerung zumindest der ersten Ortungsvorrichtung, des Positionssensors, einer Auswertevorrichtung, bevorzugt auch einer Eingabe- und/oder einer Ausgabevorrichtung, einer Datenkommunikationsschnittstelle, einer Speichervorrichtung sowie weiteren, dem Fachmann als sinnvoll erscheinenden Komponenten. Unter der Steuervorrichtung soll insbesondere eine Vorrichtung mit zumindest einer Steuerelektronik verstanden werden, die Mittel zur Kommunikation mit den anderen Komponenten des handgehaltenen Ortungsgeräts, beispielsweise Mittel zur Steuerung und/oder Regelung zumindest einer Ortungsvorrichtung und/oder Mittel zur Datenverarbeitung und/oder weitere, dem Fachmann als sinnvoll erscheinende Mittel aufweist. Insbesondere ist die Steuervorrichtung dazu vorgesehen, zumindest einen Betriebsfunktionsparameter des Ortungsgeräts in Abhängigkeit von zumindest einer Benutzereingabe und/oder einem Auswerteergebnis der Auswertevorrichtung einzustellen. Vorteilhaft kann unter der Steuerelektronik der Steuervorrichtung eine Prozessoreinheit in Verbindung mit einer Speichereinheit sowie mit einem in der Speichereinheit gespeicherten Betriebsprogramm verstanden werden, das während des Steuervorgangs ausgeführt wird. Insbesondere können die elektronischen Bauteile der Steuervorrichtung auf einer Platine oder Leiterplatte angeordnet sein, bevorzugt in Form eines Mikrokontrollers. Besonders vorteilhaft kann die Steuervorrichtung darüber hinaus dazu vorgesehen sein, das gesamte Ortungsgerät zu steuern und dessen Betrieb zu ermöglichen. Insbesondere ist die Steuervorrichtung vorgesehen, mit den anderen funktionalen Komponenten des Ortungsgeräts, insbesondere zumindest einer Ortungsvorrichtung, der Auswertevorrichtung, dem Positionssensor, einer Eingabe- und/oder einer Ausgabevorrichtung, einer Speichervorrichtung sowie einer Datenkommunikationsschnittstelle und/oder weiteren, dem Fachmann als sinnvoll erscheinenden Komponenten zu kommunizieren.

Eine Energieversorgungsvorrichtung des Ortungsgeräts ist dazu vorgesehen, das Ortungsgerät zur Inbetriebnahme und während des Betriebs mit elektrischer Energie zu versorgen. Bevorzugt handelt es sich bei dieser Vorrichtung um einen stromnetzunabhängigen Energiespeicher, insbesondere einen Akkumulator, eine Batterie, eine Brennstoffzelle, einen Kondensator, einen anderweitigen, dem Fachmann sinnvoll erscheinenden Energiespeicher oder eine Kombination/Mehrung derer. Vorzugsweise eigenen sich zur Energieversorgung des Ortungsgeräts insbesondere Akkumulatoren mit einer Zellchemie, die eine hohe Leistungs- und/oder Energiedichte bereitstellt. Dazu gehören derzeit beispielsweise Akkumulatoren der Lithium- und Lithium-Ionen-Zellchemie, insbesondere Lithium-Eisenphosphat-, Lithium-Manganoxid-, Lithium-Nickel-Kobalt-Mangan-Oxid-, überlithiierte Lithium-Nickel-Kobalt-Mangan-Oxid-, Lithium-Schwefel-, Lithium-Polymer- und Lithium-Sauerstoff-Akkumulatoren. Vorzugsweise weist die Vorrichtung zur Energieversorgung eine lösbare Formschluss- und/oder Kraftschlussverbindungsschnittstelle auf. Unter lösbar soll in diesem Zusammenhang insbesondere zerstörungsfrei trennbar verstanden werden. Somit ist die Vorrichtung zur Energieversorgung bevorzugt abnehmbar und austauschbar an dem Ortungsgerät anordenbar. Besonders bevorzugt lässt sich die abnehmbare Vorrichtung zur Energieversorgung in und/oder außerhalb des Ortungsgeräts wieder mit Energie aus einem Stromnetz versorgen und laden. In einer alternativen oder zusätzlichen Ausführungsform kann das Ortungsgerät zu seiner Energieversorgung auch einen Netzanschluss aufweisen.

In einer vorteilhaften Ausführungsform des erfindungsgemäßen Ortungsgeräts weist das Ortungsgerät eine Eingabevorrichtung zur Eingabe von Arbeitsparametern und/oder eine Ausgabevorrichtung zur Ausgabe von Arbeitsparametern auf. Arbeitsparameter bezeichnen dabei alle notwendigen und/oder sinnvollen Betriebsparameter des Ortungsgeräts, insbesondere zu dessen Steuerung, sowie Parameter betreffend die Auswertung der Messergebnisse.

Unter einer Eingabevorrichtung soll insbesondere ein Mittel verstanden werden, das dazu vorgesehen ist, zumindest eine Information von einem Benutzer des Ortungsgeräts anzunehmen und an die Steuervorrichtung und/oder die Auswertevorrichtung weiterzuleiten. Die Eingabevorrichtung kann beispielsweise in Form einer Benutzerschnittstelle und/oder unter Verwendung eines anderen Geräts realisiert sein. Dabei kann eine Benutzereingabe insbesondere über eine akustische, optische, gestengestützte und/oder taktile Eingabe durchgeführt werden. Beispielsweise kann die Eingabevorrichtung aus einem Betätigungselement, einer Tastatur, einem Display, insbesondere einem Touch-Display, einem Spracheingabemodul, einer Gestenerkennungseinheit und/oder einem Zeigegerät (beispielsweise einer Maus) bestehen. Ferner kann die Eingabevorrichtung zusätzlich auch außerhalb des Ortungsgeräts, insbesondere außerhalb des Ortungsgeräts, vorhanden sein, beispielsweise in Form eines externen Datengeräts wie einem Smartphone, einem Tablet-PC, einem PC, oder in Form eines anderen, einem Fachmann als sinnvoll erscheinenden externen Datengeräts, das über eine Datenkommunikationsschnittstelle mit der Steuervorrichtung und/oder der Auswertevorrichtung des Ortungsgeräts verbunden ist. Letzteres ist besonderes dann vorteilhaft, wenn das externe Datengerät eine erweiterte Funktionalität des Ortungsgeräts erlaubt und/oder unterstützt, beispielsweise eine speziell aufbereitete Eingabemöglichkeit oder dergleichen.

Unter einer Ausgabevorrichtung soll zumindest ein Mittel verstanden werden, das dazu vorgesehen ist, zumindest eine wechselnde Information akustisch, optisch und/oder taktil an einen Benutzer des Ortungsgeräts, insbesondere des Ortungsgeräts, auszugeben. Dies kann beispielsweise mittels eines Displays, eines Touch-Displays, eines Tonsignals, einer Veränderung eines Betriebsparameters, eines Vibrationsgebers und/oder einer LED-Anzeige realisiert werden. In einer besonders bevorzugten Ausführungsform kann die Ausgabevorrichtung als eine Anzeigevorrichtung realisiert sein. Ferner können auszugebende Informationen, beispielsweise Auswerteergebnisse und/oder Informationen betreffend einen Betriebszustand des Ortungsgeräts, auch an eine funktionale Komponente des Ortungsgeräts, insbesondere an die Steuervorrichtung, an eine Speichervorrichtung, an zumindest eine Ortungsvorrichtung, an den Positionssensor, an die Auswertevorrichtung und/oder, insbesondere zur Erhöhung des Benutzerkomforts, an ein Daten verarbeitendes System ausgegeben werden. Letzteres umfasst zumindest auch eine Ausgabe einer Information an ein externes Gerät wie ein Smartphone, ein Tablet-PC, ein PC sowie an ein anderes, einem Fachmann als sinnvoll erscheinendes externes Datengerät, das über eine Datenkommunikationsschnittstelle mit der Auswertevorrichtung und/oder der Steuervorrichtung des Ortungsgeräts verbunden ist.

Sowohl die Eingabevorrichtung als auch die Ausgabevorrichtung können vorteilhaft direkt im Gehäuse des Ortungsgeräts untergebracht sein. Bevorzugt ist die Eingabevorrichtung und/oder die Ausgabevorrichtung dann in einer dem Benutzer des Ortungsgeräts bei dessen Benutzung zugewandten Gehäuseseite angeordnet. Eine Gehäuseseite meint insbesondere eine das Ortungsgerät zu seiner Umgebung hin begrenzende Außenwand des Gehäuses. Unter "in einer Gehäuseseite angeordnet" soll verstanden werden, dass die Eingabevorrichtung und/oder die Ausgabevorrichtung auf der Gehäuseseite in deren Oberfläche eingesetzt, aufgebracht oder anderweitig befestigt sind/ist. Insbesondere kann das Gehäuse auch selbst Bestandteil der Eingabe- bzw. Ausgabevorrichtung sein. Alternativ oder zusätzlich kann die Eingabe- und/oder Ausgabevorrichtung auch ausgelagert werden und beispielsweise über externe Vorrichtungen realisiert werden. Letztere Realisierungsmöglichkeit umfasst explizit die Steuerung, Auswertung und Ausgabe von Ortungsergebnissen über drahtgebundene und/oder drahtlose externe Systeme wie beispielsweise Fernbedienungen, Computersteuerungen, Tablet-PCs und/oder andere mobile Geräte wie Mobiltelefone, Smartphones etc.

In einer vorteilhaften Ausführungsform des erfindungsgemäßen Ortungsgeräts ist zumindest eine Speichervorrichtung zum Speichern von Messergebnissen, insbesondere Ortungsergebnissen, und/oder Ortungsdaten und/oder Positionsdaten und/oder zumindest zweidimensionalen Karteninformationen und/oder Arbeitsparametern vorgesehen. Unter einer Speichervorrichtung soll insbesondere ein elektronischer Datenspeicher umfassend die zu dessen Ansteuerung benötigten Mittel verstanden werden. Die Speichervorrichtung ist zur Ablage und zum Abruf von Messergebnissen und/oder Ortungsinformationen und/oder Arbeitsparameter und/oder anderen im Rahmen des Betriebs des Ortungsgeräts benötigten oder sinnvollen Daten vorgesehen. Insbesondere ist die Speichervorrichtung vorgesehen, Ortungsdaten und/oder ausgewertete Ortungsinformationen, bevorzugt zumindest zweidimensionale Karteninformationen, zumindest vorübergehend zu speichern und/oder abzurufen. Grundsätzlich ist auch denkbar, dass die Speichervorrichtung zur Ablage und zum Abruf von Datenkomponenten vorgesehen ist.

Bevorzugt ist die Speichervorrichtung als ein von der Auswertevorrichtung und/oder der Steuervorrichtung beschreibbarer und auslesbarer Speicher ausgebildet. Die Speichervorrichtung kann alle Formen an externen und internen elektronischen, insbesondere digitalen Speichern, umfassen, beispielsweise einen RAM-Baustein oder integrierte Schaltkreise. Alternativ oder zusätzlich kann die Speichervorrichtung insbesondere auch vorgesehen sein, wechselbare Speichermedien wie Speicherchips, USB-Sticks, Memory-Sticks, Speicherkarten, SD-Karten oder dergleichen zu beschreiben und zu lesen. In einer bevorzugten Ausgestaltung kann die Speichervorrichtung in der Auswertevorrichtung und/oder in der Steuervorrichtung und/oder in der Eingabevorrichtung und/oder in der Ausgabevorrichtung und/oder in einer Datenkommunikationsschnittstelle integriert sein, d.h. beispielsweise als ein Teil eines Speichers der Auswertevorrichtung ausgebildet sein.

In einer vorteilhaften Ausführungsform des erfindungsgemäßen Ortungsgeräts ist eine Datenkommunikationsschnittstelle zur insbesondere drahtlosen Kommunikation vorgesehen, mittels der das Ortungsgerät Daten austauschen kann, insbesondere Messergebnisse, insbesondere Ortungsergebnisse, und/oder Ortungsdaten und/oder Positionsdaten und/oder zumindest zweidimensionale Karteninformationen und/oder Arbeitsparameter senden und/oder empfangen kann. Die Datenkommunikationsschnittstelle ist signaltechnisch zumindest an die Steuervorrichtung und/oder die Auswertevorrichtung des Ortungsgeräts angebunden. Bevorzugt verwendet die Datenkommunikationsschnittstelle ein standardisiertes Kommunikationsprotokoll zu einer Übertragung von elektronischen, insbesondere digitalen Daten. Vorteilhaft umfasst die Datenkommunikationsschnittstelle eine drahtlose Schnittstelle, insbesondere beispielsweise eine WLAN-, Bluetooth-, Infrarot-, NFC-, RFID-Schnittstelle oder eine andere, einem Fachmann als sinnvoll erscheinende, drahtlose Schnittstelle. Alternativ oder zusätzlich kann die Datenkommunikationsschnittstelle auch einen Adapter zu einer kabelgebundenen Datenübertagung aufweisen, beispielsweise einen USB- oder Mikro-USB-Adapter.

Vorteilhaft können mittels der Datenkommunikationsschnittstelle Messergebnisse, insbesondere Ortungsergebnisse, und/oder Ortungsdaten und/oder Positionsdaten und/oder zumindest zweidimensionale Karteninformationen und/oder Arbeitsparameter von dem Ortungsgerät an ein externes Datengerät, beispielsweise an ein Smartphone, einen Tablet-PC, einen PC, einen Drucker oder weitere einem Fachmann als sinnvoll erscheinende externe Geräte gesendet werden oder von diesen empfangen werden. Mittels der erfindungsgemäßen Ausgestaltung kann vorteilhaft eine Übertragung von Daten ermöglicht werden, die zu einer weiteren Auswertung von mit dem Ortungsgerät erfassten Messsignalen und/oder zumindest zweidimensionalen Karteninformationen nutzbar ist. Ferner können vorteilhaft vielfältige Zusatzfunktionen ermöglicht und eingebunden werden, die insbesondere auch eine direkte Kommunikation mit Smartphones (insbesondere über programmierte Apps) oder ähnlichen portablen Datengeräten erfordern. Diese können beispielsweise automatische Auswerte-Funktionen, Firmware-Updates, Datennachbearbeitung, Datenaufbereitung, Datenabgleich mit anderen Geräten, oder dergleichen umfassen.

Unter Ortungsdaten sollen insbesondere Messwerte und/oder Messsignale einer Ortungsvorrichtung, insbesondere der zumindest einen ersten Ortungsvorrichtung, verstanden werden. In Abhängigkeit einer Ausgestaltung der verwendeten Ortungsvorrichtung und insbesondere auch in Abhängigkeit einer Verwendungsweise und/oder Anwendungsweise einer verwendeten Ortungsvorrichtung, können die Ortungsdaten Messwerte und/oder Messsignale unterschiedlicher Kategorien umfassen. Im Rahmen dieses Patents werden mit "Ortungsdaten einer Kategorie" insbesondere Messwerte und/oder Messsignale einer Ortungsvorrichtung bezeichnet, deren Messung einer interessierenden physikalischen, insbesondere auch chemischen, Größe gilt. Dabei kann die Größe sowohl eine Eigenschaft des untersuchten Materials, insbesondere des Ortungsobjekts oder des Werkstücks, und/oder eine Eigenschaft eines Vorganges, beispielsweise einer Strahlung, und/oder eine Eigenschaft eines Zustandes, beispielsweise eines elektrischen oder magnetischen Feldes, betreffen und/oder sein. Die Größe kann sowohl dimensionslos als auch dimensionsbehaftet sein. Bevorzugt unterliegen die Ortungsdaten einer Kategorisierung hinsichtlich einer in den entsprechenden Ortungsdaten enthaltenen Information, insbesondere einer die Ortung von unter einer Untersuchungsoberfläche verborgenen Ortungsobjekten betreffenden Information. Bevorzugt kann es sich bei den Ortungsdaten einer Kategorie neben analogen oder digitalen Messwerten und/oder Messsignalen auch um boolesche Aussagen und/oder um Kriterien und/oder um Indikatoren oder dergleichen handeln. Es sei nochmals darauf hingewiesen, dass eine Unterscheidung von Ortungsdaten in unterschiedliche Kategorien insbesondere von einer verwendeten Ortungsvorrichtung und auch von deren Verwendungsweise und/oder Anwendungsweise abhängt.

Unter der Verwendungsweise und/oder Anwendungsweise einer Ortungsvorrichtung soll insbesondere verstanden werden, dass in Folge einer unterschiedlichen Informationseingabe, insbesondere einer Ansteuerung, einer unterschiedlichen Signalverarbeitung, insbesondere einer Durchführung einer Messung, und/oder einer unterschiedlichen Informationsausgabe der Ortungsvorrichtung unterschiedliche Messwerte und/oder Messsignale ermittelt und/oder erzeugt und/oder ausgegeben werden. Bevorzugt bewirkt die Verwendungsweise und/oder Anwendungsweise der Ortungsvorrichtung eine Auswirkung auf die Funktionsweise der Ortungsvorrichtung, insbesondere auf die Funktionsweise eines umfassten Ortungssensors.

Beispiele für Ortungsdaten einer Kategorie können insbesondere Ortungsdaten sein, die physikalische, insbesondere auch chemische, Größe betreffen wie insbesondere eine Amplitude oder eine Phasenlage oder eine Richtungsinformation oder eine Signalstärke oder eine Relaxationszeit oder eine Tiefeninformation oder eine Wahr-/Falsch-Aussage über das Vorhandensein eines Ortungsobjekts oder dergleichen. Wird beispielsweise eine Ortungsvorrichtung umfassend einen Radarsensor betrachtet, so sind insbesondere beispielsweise zumindest folgende Ortungsdaten unterschiedlicher Kategorie denkbar:
- Messwerte und/oder Messsignale betreffend Laufzeiten von Radarpulsen
- Messwerte und/oder Messsignale betreffend Reflexionskoeffizienten
- Messwerte und/oder Messsignale betreffend Phasendifferenzen
- Messwerte und/oder Messsignale betreffend einer Detektionsrichtung (Richtwirkung, elektrische Ausrichtung der elektromagnetischen Strahlung)
- Messwerte und/oder Messsignale betreffend Polarisationsrichtungen

Unter einer Tiefeninformation soll in diesem Zusammenhang insbesondere eine Information verstanden werden, die einen Abstand der Ortungsobjekte von der Untersuchungsoberfläche und/oder eine Erstreckung der Ortungsobjekte senkrecht zur Untersuchungsoberfläche wiedergibt.

Das Ortungsgerät weist eine Auswertevorrichtung auf, die einen Informationseingang, eine Informationsverarbeitungseinheit sowie eine Informationsausgabe aufweist. Der Informationseingang dient bevorzugt zur Annahme von mittels einer Ortungsvorrichtung, insbesondere der ersten Ortungsvorrichtung, bestimmten Ortungsdaten und/oder mittels des Positionssensors ermittelten Positionsdaten. Die Informationsverarbeitungseinheit dient der Bearbeitung, insbesondere der Auswertung, von angenommenen Daten. Die Informationsausgabe dient der Weitergabe der bearbeiteten und/oder ausgewerteten Daten an die Steuervorrichtung und/oder eine Speichervorrichtung und/oder eine Datenkommunikationsschnittstelle und/oder eine Ausgabevorrichtung und/oder eine Anzeigevorrichtung des Ortungsgeräts. Vorteilhaft weist die Auswertevorrichtung Komponenten auf, die zumindest einen Prozessor, einen Speicher und ein Betriebsprogramm mit Auswerte- und Berechnungsroutinen umfassen. Insbesondere können die elektronischen Bauteile der Auswertevorrichtung auf einer Platine angeordnet sein, bevorzugt auf einer gemeinsamen Platine mit der Steuervorrichtung. Besonders bevorzugt sind die elektronischen Bauteile der Auswertevorrichtung in Form eines Mikrokontrollers realisiert. Des Weiteren können die Steuervorrichtung und die Auswertevorrichtung besonders bevorzugt auch als ein einzelnes Bauteil ausgeführt sein. Ferner kann die Auswertevorrichtung auch mit Komponenten der Anzeigevorrichtung als ein einzelnes Bauteil ausgeführt sein.

Die Auswertevorrichtung ist dazu vorgesehen, durch Zuordnung von Ortungsdaten einer ersten Kategorie der ersten Ortungsvorrichtung, zu Positionsdaten eine erste zumindest zweidimensionale Karteninformation zu bestimmen und bereitzustellen. Vorteilhaft ist die Auswertevorrichtung auf diese Weise vorgesehen, die mittels einer Ortungsvorrichtung, insbesondere der ersten Ortungsvorrichtung, bereitgestellten Ortungsdaten, insbesondere beispielsweise ermittelte Amplitudenwerte, Tiefeninformationen, Signalphasen oder dergleichen, den mittels des Positionssensors ermittelten Positionsdaten zuzuordnen. Prinzipiell kann eine Zuordnung kann auch umgekehrt erfolgen. Die Auswertevorrichtung erlaubt auf diese Weise auf konstruktiv besonders einfache Weise, eine erste zumindest zweidimensionale Karteninformation zu bestimmen und/oder bereitzustellen, in der sowohl Positionsdaten als auch mittels der ersten Ortungsvorrichtung ermittelte Ortungsdaten einer ersten Kategorie korreliert sind.

Es sei angemerkt, dass die Auswertevorrichtung prinzipiell auch in eine Mehrzahl von untergeordneten Auswerteeinheiten aufgeteilt sein kann, wobei eine Auswerteeinheit zur Auswertung von Ortungsdaten einer spezifischen Ortungsvorrichtung, insbesondere einer einen spezifischen Ortungssensor umfassenden Ortungsvorrichtung, und/oder von Ortungsdaten einer spezifischen Kategorie vorgesehen ist.

Unter Bestimmung und Bereitstellung einer zumindest zweidimensionalen Karteninformation, insbesondere einer ersten zumindest zweidimensionalen Karteninformation, soll insbesondere verstanden werden, dass zumindest eine Karteninformation betreffend eine Existenz oder eine Position oder eine Tiefe oder ein Material oder eine Ausrichtung oder eine andere, einem Fachmann sinnvoll erscheinende Eigenschaft eines unter einer Untersuchungsoberfläche verborgenen Ortungsobjekts aus von einer Ortungsvorrichtung, insbesondere der ersten Ortungsvorrichtung, erfassten Ortungsdaten von der Auswertevorrichtung bestimmt wird und dem Ortungsgerät zur weiteren Verarbeitung zur Verfügung gestellt wird. Die erste zumindest zweidimensionale Karteninformation wird einer Anzeigevorrichtung und vorzugsweise einer Datenkommunikationsschnittstelle und/oder einer Speichervorrichtung zur weiteren Verarbeitung von der Auswertevorrichtung zur Verfügung gestellt. Unter einer zumindest zweidimensionalen Karteninformation im Rahmen dieses Patents sollen Daten verstanden werden, die vorgesehen sind, mittels einer Anzeigevorrichtung in Form einer Karte an einen Benutzer des Ortungsgeräts ausgegeben zu werden. In einer bevorzugten Ausführungsform des Ortungsgeräts kann die Ausgabe beispielsweise über ein flächiges, zweidimensionales Ausgabe-Display der Anzeigevorrichtung in Form einer Karte erfolgen. Bevorzugt stellt eine Karteninformation, insbesondere auch die erste zumindest zweidimensionale Karteninformation, eine mehrdimensionale, insbesondere pseudo-mehrdimensionale, zumindest aber zweidimensionale ausgewertete Information über eine Ortung der unter einer Untersuchungsoberfläche verborgenen Ortungsobjekte dar. Dabei kennzeichnet die Bezeichnung "zumindest zweidimensional", dass eine Karteninformation eine Information über unter einer Untersuchungsoberfläche verborgene Ortungsobjekte zumindest in zwei Richtungen, vorzugsweise in zwei orthogonalen Richtungen, enthält. Dabei sind die zwei Richtungen der Untersuchungsoberfläche, beispielsweise anhand von gegebenen und/oder festlegbaren Bezugspunkten, zuordenbar. Bevorzugt erstecken sich die zwei Richtungen in einer Ebene der Untersuchungsoberfläche, insbesondere entlang der Untersuchungsoberfläche und/oder in einer zur Untersuchungsoberfläche parallel angeordneten Ebene. Eine zumindest zweidimensionale Karteninformation umfasst zumindest Informationen über unter einer Untersuchungsoberfläche verborgene Ortungsobjekte, die mit zweidimensionalen Positionsdaten des Ortungsgeräts bezogen auf die Untersuchungsoberfläche zum Ortungszeitpunkt der Ortung korreliert sind. Eine zumindest zweidimensionale Karteninformation, insbesondere die erste zumindest zweidimensionale Karteninformation, kann insbesondere auf eine Messung unmittelbar bezogene Informationen oder Messwerte einer Ortungsvorrichtung betreffen, beispielsweise Amplituden, Phasenlagen, Relaxationszeiten oder dergleichen. Alternativ kann eine zumindest zweidimensionale Karteninformation, insbesondere die erste zumindest zweidimensionale Karteninformation, auch interpretierte und/oder aufbereitete Informationen wie Richtungsinformationen, qualitative Signalstärken eines Ortungssignals, Tiefeninformationen oder dergleichen betreffen.

Im Sinne der Bestimmung einer zumindest zweidimensionalen Karteninformation, insbesondere der ersten zumindest zweidimensionalen Karteninformation, die bevorzugt in Form einer Karte oder eines Abbilds der Untersuchungsoberfläche an einen Benutzer des Ortungsgeräts ausgegeben wird, stellt das Ortungsgerät ein bildgebendes Ortungsgerät dar. "Bildgebend" charakterisiert somit insbesondere die Fähigkeit des Ortungsgeräts, in Folge eines Ortungsvorgangs eine bildhafte Darstellung der Ortungsergebnisse, insbesondere einer zumindest zweidimensionalen Karteninformation, bereitzustellen und bevorzugt an einen Benutzer des Ortungsgeräts auszugeben.

In einer bevorzugten Ausführungsform kann eine zumindest zweidimensionale Karteninformation, insbesondere die erste zumindest zweidimensionale Karteninformation, in Form einer insbesondere mehrdimensionalen Matrix, Tabelle, Array, Liste oder dergleichen verarbeitet und/oder gespeichert und/oder ausgegeben werden. In dieser mehrdimensionalen Matrix, Tabelle, Array, Liste oder dergleichen können beispielsweise in jeweils einer Spalte Positionsdaten bezüglich jeweils einer von zwei orthogonalen Raumrichtungen zugeordnet werden. Eine dritte Spalte dient der Zuweisung von an entsprechender Position ermittelten Ortungsdaten und/oder bereits ausgewerteten Informationen, wie beispielsweise einer Information über das Vorhandensein eines Ortungsobjekts oder eine Information über die Tiefe, in der ein Ortungsobjekt detektiert wird. Eine Ausgabe einer zumindest zweidimensionalen Karteninformation erfolgt zur weiteren Verwendung an die Anzeigevorrichtung und bevorzugt an die Steuervorrichtung und/oder die Datenkommunikationsschnittstelle. Die Anzeigevorrichtung ist vorgesehen, eine in Form einer insbesondere mehrdimensionalen Matrix, Tabelle, Array, Liste oder dergleichen bereitgestellte zumindest zweidimensionale Karteninformation, insbesondere die erste zumindest zweidimensionale Karteninformation, zu verarbeiten und als Karte auf einer Anzeigeeinheit, beispielsweise einem Display, darzustellen. Bevorzugt ist die Anzeigevorrichtung dabei zur Darstellung einer zumindest zweidimensionalen Karteninformation, insbesondere der ersten zumindest zweidimensionalen Karteninformation, in Form einer farb- oder graustufencodierten Karte vorgesehen.

Vorteilhaft lässt sich durch Umpositionieren, insbesondere Verfahren, der Ortungsvorrichtung in Bezug auf die Untersuchungsoberfläche eine sukzessive Untersuchung und Vermessung der Untersuchungsoberfläche durchführen. Dabei wird die erste zumindest zweidimensionale Karteninformation sukzessiv mit zueinander zugeordneten Ortungsdaten und Positionsdaten der Ortungsvorrichtung, insbesondere bezogen auf die Untersuchungsoberfläche, erweitert.

In einer alternativen oder zusätzlichen Ausführungsform des Ortungsgeräts kann vorgesehen sein, eine zumindest zweidimensionale Karteninformation, insbesondere die erste zumindest zweidimensionale Karteninformation, unter Verwendung einer richtungs- und/oder ortsauflösenden Ortungsvorrichtung zu erzeugen. In dieser Ausführungsform ist die richtungs- und/oder ortsauflösende Ortungsvorrichtung dazu vorgesehen, eine Information über ein Ortungsobjekt zumindest teilweise in zwei Dimensionen oder Richtungen, entlang derer sich die Untersuchungsoberfläche erstreckt, richtungs- und/oder ortsaufgelöst zu erfassen. Die Richtungs- und/oder Ortsauflösung erfolgt bevorzugt in Bezug auf die Untersuchungsoberfläche, insbesondere anhand von gegebenen und/oder festlegbaren Bezügen hinsichtlich des Ortungsgeräts als Referenz. Eine Korrelation der Richtung oder des Orts der Ortung unter Bezug auf das Ortungsgerät kann beispielsweise unter Verwendung von Winkeln und/oder Koordinaten realisiert werden, die jeweils relative Winkel bzw. Koordinaten bezogen auf ein Merkmal des Ortungsgeräts, insbesondere beispielsweise den Mittelpunkt des Ortungssensors der richtungs- und/oder ortsauflösenden Ortungsvorrichtung definieren. Somit kann vorteilhaft erreicht werden, dass Ortungsdaten mit einer Richtungs- und/oder Ortsinformation, insbesondere hinsichtlich einer Position und/oder Ausrichtung der richtungs- und/oder ortsauflösenden Ortungsvorrichtung auf der Untersuchungsoberfläche, korreliert werden können. Auf diese Weise kann beispielsweise eine Ortung eines verborgenen Ortungsobjekts mit einer Richtungsangabe verknüpft werden, unter der die entsprechenden Ortungsdaten von der richtungs- und/oder ortsauflösenden Ortungsvorrichtung und somit vom Ortungsgerät aus gesehen detektiert werden. Eine Richtungs- und/oder Ortsauflösung erfolgt somit lediglich unter Verwendung der Ortungsvorrichtung selbst, sodass ein Umpositionieren des Ortungsgeräts bezogen auf die Untersuchungsoberfläche zur Erzeugung einer Richtungs- und/oder Ortsauflösung nicht nötig ist.

Bevorzugt können die Winkel und/oder Koordinaten bei Verwendung der richtungs- und/oder ortsauflösenden Ortungsvorrichtung alternativ oder zusätzlich als Positionsdaten zur Bestimmung einer zumindest zweidimensionalen Karteninformation, insbesondere der ersten zumindest zweidimensionalen Karteninformation, verwendet werden.

Zur Realisierung einer richtungs- und/oder ortsauflösenden Ortungsvorrichtung kann die Ortungsvorrichtung Vorgesehen sein, eine physikalische und/oder chemische Größen, die zur Untersuchung eines unter einer Untersuchungsoberfläche verborgenen Ortungsobjekts geeignet ist, richtungs- und/oder ortsabhängig zu erfassen und in ein elektrisch auswertbares Signal umzuwandeln. In einer Ausführungsform kann die Ortungsvorrichtung, insbesondere die erste Ortungsvorrichtung, dazu beispielsweise einen richtungs- und/oder ortsauflösenden Ortungssensor aus einer Gruppe von Sensoren aufweisen, die zumindest auf dielektrischen und/oder resistiven Verfahren basierende Sensoren, insbesondere Kapazitäts-, Mikrowellen-, Ultraschall-, Widerstands-, Leitfähigkeits- und/oder Radar-Sensoren, insbesondere auch Ultrabreitband-Radar- und/oder Breitband-Impuls-Radar-Sensoren, aber auch induktions-, strahlungs- sowie magnetfeldsensitive Sensoren umfasst. Alternativ oder zusätzlich kann der zumindest eine richtungs- und/oder ortsauflösende Ortungssensor der richtungs- und/oder ortsauflösenden Ortungsvorrichtung als elektrisch und/oder mechanisch schwenkbarer Ortungssensor und/oder als elektrisch ausrichtbarer Ortungssensor und/oder als ein Array aus Ortungssensoren und/oder als ein bildgebender Ortungssensor ausgebildet sein.

"Elektrische ausrichtbar" meint hier insbesondere ein Ausrichten (Richten) des Ortungssensors, insbesondere eines von dem Ortungssensor ausgesendeten und/oder detektierten Signals, durch eine elektrische Ansteuerung, wie dies beispielsweise unter Verwendung von elektromagnetische Strahlung emittierenden und/oder detektierenden Ortungssensoren realisiert werden kann.

Es sei darauf hingewiesen, dass die elektrische Ausrichtung durch elektrische Ansteuerung sich von einem elektrischen, insbesondere motorisierten, Schwenken des Ortungssensors unterscheidet.

In den genannten Realisierungsformen werden bevorzugt richtungs- und/oder ortsaufgelöste Ortungsdaten in Abhängigkeit eines Schwenkwinkels und/oder einer Schwenkposition und/oder eines Ausrichtwinkels und/oder einer Ausrichtposition mit dem Ortungssensor ermittelt und an die Auswertevorrichtung ausgegeben. Der Schwenkwinkel und/oder die Schwenkposition kann bevorzugt in eine Positionskoordinate umgewandelt werden, sodass ein Bezug zur untersuchten Untersuchungsoberfläche hergestellt wird. Insbesondere sind somit Positionsdaten der richtungs- und/oder ortsauflösenden Ortungsvorrichtung erzeugbar.

Unter Verwendung einer richtungs- und/oder ortsauflösenden Ortungsvorrichtung ist es einem Benutzer des Ortungsgeräts möglich, mit nur lediglich einer Messung ohne Umpositionieren des Ortungsgeräts bezogen auf die Untersuchungsoberfläche dennoch eine in einem gewissen Erfassungsbereich richtungs- und/oder ortsaufgelöste zumindest zweidimensionale Karteninformation zu bestimmen. Eine Aussage, ob beispielsweise an der gewählten (Mess-)Position auf der Untersuchungsoberfläche eine Bohrung ohne Beschädigung von unter der Untersuchungsoberfläche verborgenen Untersuchungsgegenständen durchgeführt werden kann, ist unmittelbar und mit hoher Zuverlässigkeit aus der zumindest zweidimensionalen Karteninformation, insbesondere der ersten zumindest zweidimensionalen Karteninformation, ableitbar. Ferner können in der Nähe der gewählten Position befindliche Ortungsobjekte bereits erkannt werden, sodass einem Benutzer eine Risiko- oder Gefahrenabschätzung erleichtert wird.

Erfindungsgemäß wird vorgeschlagen, dass die Auswertevorrichtung dazu vorgesehen ist, zumindest eine weitere, von der ersten zumindest zweidimensionalen Karteninformation unterschiedliche, zumindest zweidimensionale Karteninformation zu bestimmen. Somit erlaubt die Auswertevorrichtung, zumindest eine weitere zumindest zweidimensionalen Karteninformation, beispielsweise eine zweite oder auch eine dritte zumindest zweidimensionalen Karteninformation, zu bestimmen und dem Ortungsgerät, insbesondere der Anzeigevorrichtung und/oder der Datenkommunikationsschnittstelle und/oder der Speichervorrichtung, zur weiteren Verarbeitung bereitzustellen. Bevorzugt stellt die zumindest eine weitere zumindest zweidimensionale Karteninformation eine mehrdimensionale, insbesondere pseudo-mehrdimensionale, zumindest aber zweidimensionale ausgewertete Information über eine Ortung der unter einer Untersuchungsoberfläche verborgenen Ortungsobjekte dar. Somit kann die zumindest eine weitere zumindest zweidimensionale Karteninformation vorteilhaft ebenfalls eine Existenz oder eine Position oder eine Tiefe oder ein Material oder eine Ausrichtung oder eine andere, einem Fachmann sinnvoll erscheinende Eigenschaft eines unter einer Untersuchungsoberfläche verborgenen Ortungsobjekts betreffen. Die zumindest eine weitere zumindest zweidimensionale Karteninformation kann, wie die erste zumindest zweidimensionale Karteninformation, insbesondere auf eine Messung unmittelbar bezogene Informationen oder Messwerte einer Ortungsvorrichtung betreffen, beispielsweise Amplituden, Phasenlagen, Relaxationszeiten oder dergleichen. Alternativ kann die zumindest eine weitere zumindest zweidimensionale Karteninformation auch interpretierte und/oder aufbereitete Informationen wie Richtungsinformationen, qualitative Signalstärken eines Ortungssignals, Tiefeninformationen oder dergleichen betreffen.

Erfindungsgemäß unterscheidet sich die zumindest eine weitere zumindest zweidimensionale Karteninformation von der ersten zumindest zweidimensionalen Karteninformation hinsichtlich ihres Informationsinhalts. Auf diese Weise wird der besondere Vorteil generiert, neben der in der ersten zumindest zweidimensionale Karteninformation enthaltenen Information über unter einer Untersuchungsoberfläche verborgene Ortungsobjekte auch eine weitere, in der zumindest einen weiteren zumindest zweidimensionalen Karteninformation enthaltene Information zu bestimmen und bereitzustellen. Mit anderen Worten können unter Verwendung der zumindest einen weiteren zumindest zweidimensionalen Karteninformation weitere Informationen über unter einer Untersuchungsoberfläche verborgene Ortungsobjekte gewonnen und bereitgestellt werden. Diese weiteren Informationen können sowohl redundante Informationen als auch zusätzliche Informationen betreffen oder beinhalten, die über die in der ersten zumindest zweidimensionalen Karteninformation enthaltenen Informationen hinausgehen.

In einem Ausführungsbeispiel können insbesondere in der ersten zumindest zweidimensionalen Karteninformation Informationen über unter einer Untersuchungsoberfläche verborgene metallische Ortungsobjekte enthalten sein, während in der zumindest einen weiteren zumindest zweidimensionalen Karteninformation beispielsweise Informationen über unter einer Untersuchungsoberfläche verborgene stromführende Ortungsobjekte enthalten sind. Die in diesem Ausführungsbeispiel genannten Informationsinhalte betreffen unterschiedliche, insbesondere nicht redundante, Informationen über unter der Untersuchungsoberfläche verborgene Ortungsobjekte.

Vorteilhaft lassen sich die unter Verwendung der zumindest einen weiteren zumindest zweidimensionalen Karteninformation bereitgestellten weiteren Informationen beispielsweise bei der Beurteilung, Bewertung, Interpretation, Auslegung, Darstellung oder dergleichen von Ortungsergebnissen, insbesondere von in der ersten zumindest zweidimensionalen Karteninformation enthaltenen Ortungsergebnissen, verwenden. Durch Bestimmung und Bereitstellung der ersten zumindest zweidimensionalen Karteninformation sowie zumindest einer weiteren zumindest zweidimensionalen Karteninformation kann ein Informationsgehalt der von dem Ortungsgerät bestimmten Ortungsinformation erhöht und qualitativ verbessert werden.

In einer bevorzugten Ausführungsform des bildgebenden Ortungsgeräts ist die Auswertevorrichtung dazu vorgesehen, zumindest eine weitere zumindest zweidimensionale Karteninformation durch Zuordnung von Ortungsdaten zumindest einer weiteren Kategorie zu Positionsdaten zu bestimmen.

Vorteilhaft stellen die Ortungsdaten zumindest einer weiteren Kategorie dabei Ortungsdaten der ersten Ortungsvorrichtung dar. Auf diese Weise können, insbesondere in Abhängigkeit einer Verwendungsweise und/oder Anwendungsweise der verwendeten Ortungsvorrichtung, Ortungsdaten zumindest einer weiteren Kategorie ermittelt werden, die zu Positionsdaten zugeordnet werden und somit zur Bestimmung der zumindest einen weiteren zumindest zweidimensionalen Karteninformation verwendet werden.

In einer Ausführungsform des bildgebenden Ortungsgeräts weisen die Ortungsdaten der ersten Kategorie und die Ortungsdaten der zumindest einen weiteren Kategorie unterschiedliche Ortungsdaten aus einer Liste von Ortungsdaten auf, die zumindest reellwertige Ortungsdaten (beispielsweise Amplitude, Phase, Signalstärke, Zeitdauer, Pulsdauer, Entfernung, Frequenz, Temperatur), komplexwertige Ortungsdaten (beispielsweise Amplitude und Phase, Transmissionskoeffizienten, Reflexionskoeffizienten), vektorwertige Ortungsdaten (beispielsweise Frequenzverläufe, Zeitverläufe, Ortsverläufe, Winkelverläufe der genannten reellwertigen oder komplexwertigen Ortungsdaten) und matrixwertige Ortungsdaten (beispielsweise eine Kombinationen aus den genannten vektorwertigen Ortungsdaten wie z.B. ortsaufgelöste Frequenzverläufe von Reflexionskoeffizienten), oder dergleichen, umfasst.

Vorteilhaft kann derart die zumindest eine weitere zumindest zweidimensionale Karteninformation auf konstruktiv einfache Weise unter Verwendung der ersten Ortungsvorrichtung bestimmt werden. Ferner kann das Ortungsgerät wirtschaftlich günstig realisiert werden.

In einer bevorzugten Ausführungsform des bildgebenden Ortungsgeräts ist die Auswertevorrichtung dazu vorgesehen, zumindest eine weitere zumindest zweidimensionale Karteninformation durch Zuordnung von Ortungsdaten zumindest einer weiteren Ortungsvorrichtung zu Positionsdaten zu bestimmen.

Vorteilhaft werden die Ortungsdaten unter Verwendung zumindest einer weiteren Ortungsvorrichtung ermittelt und dem Gerät, insbesondere der Auswertevorrichtung, zur Verfügung gestellt. Auf diese Weise können in Abhängigkeit der Wahl der zumindest einen weiteren Ortungsvorrichtung Ortungsdaten ermittelt werden, die sich bevorzugt von den von der ersten Ortungsvorrichtung ermittelten Ortungsdaten unterscheiden. Die Auswertevorrichtung verarbeitet diese Ortungsdaten der zumindest einen weiteren Ortungsvorrichtung, ordnet sie Positionsdaten zu und bestimmt derart die zumindest eine weitere zumindest zweidimensionale Karteninformation.

In einer beispielhaften Ausführungsform des bildgebenden Ortungsgeräts weisen die erste Ortungsvorrichtung und die zumindest eine weitere Ortungsvorrichtung, insbesondere eine zweite Ortungsvorrichtung, Sensoren aus einer Liste von Sensoren auf, die zumindest induktive Sensoren (Wirbelstromsensoren, Pulsinduktionssensoren, Transmit-Receive-Sensoren, Magnetfeldsensoren), kapazitive Sensoren, AC-Sensoren, Radar-Sensoren, insbesondere Ultrabreitband-Radar- und Breitband-Impuls-Radar-Sensoren, Mikrowellen-Sensoren, Ultraschall-Sensoren, Temperatursensoren (berührungslos und nichtberührungslos), Impact-Echo-Sensoren, Potentialfeldsensoren, Widerstands-Sensoren, Leitfähigkeits-Sensoren, Feuchtigkeits-Sensoren und NMR-Sensoren oder dergleichen umfasst.

Als eine Ausführungsform kann eine Ortungsvorrichtung alternativ oder zusätzlich einen bildgebenden Sensor, insbesondere einen optischen Sensor, bevorzugt eine Kamera, aufweisen, der die Oberfläche optisch abbildet. Unter einer Kamera soll in diesem Zusammenhang eine Vorrichtung verstanden werden, die zu einer kontinuierlichen Erfassung von Bilddaten vorgesehen ist. Die Kamera kann als eine optische Kamera, als eine Infrarotkamera oder als eine Kamera für einen anderen Wellenlängenbereich ausgebildet sein. Es ist denkbar, dass die Kamera eine einzelne optische Einheit oder eine Mehrzahl von optischen Einheiten aufweist und derart beispielsweise als eine Stereokamera ausgebildet ist. Als Ortungsdaten erfasst diese derart gestaltete Ortungsvorrichtung Bildausschnitte der Oberfläche. Es sei angemerkt, dass eine derartige Ortungsvorrichtung nur eingeschränkt zur Ortung von unter einer Untersuchungsoberfläche verborgenen Ortungsobjekten geeignet ist. Ferner kann ein optischer Sensor, insbesondere eine Kamera, zur Positionsbestimmung verwendet werden.

Vorteilhaft kann derart die zumindest eine weitere zumindest zweidimensionale Karteninformation auf konstruktiv einfache Weise unter Verwendung zumindest einer weiteren Ortungsvorrichtung bestimmt werden. Ferner kann das Ortungsgerät wirtschaftlich günstig realisiert werden.

In einer bevorzugten Ausführungsform des bildgebenden Ortungsgeräts ist die Auswertevorrichtung dazu vorgesehen, zumindest eine weitere zumindest zweidimensionale Karteninformation durch Zuordnung ausgewerteter Ortungsdaten der ersten Ortungsvorrichtung und/oder zumindest einer weiteren Ortungsvorrichtung zu Positionsdaten zu bestimmen.

Unter "ausgewerteten Ortungsdaten" sind insbesondere mittels der Auswertevorrichtung unter Verwendung von Auswerteroutinen aufbereitete und/oder analysierte Messsignale und/oder Messdaten zu verstehen. Die Auswertevorrichtung oder die Ortungsvorrichtung selbst verfügt zur Durchführung einer derartigen Auswertung über benötigte Mittel, insbesondere beispielsweise Regelroutinen, Steuerroutinen, Analyseroutinen, Berechnungsroutinen, Zuordenroutinen, Umrechnungsroutinen, statistische Auswerteroutinen, Interpolationsalgorithmen, Extrapolationsalgorithmen, Filter, oder dergleichen. Weitere zur Auswertung von Messdaten und/oder Messsignalen benötigte Mittel, insbesondere allgemein bekannte zur Auswertung von Messdaten und/oder Messsignalen geläufige Mittel, sind einem Fachmann hinreichend bekannt und werden daher hier nicht näher erwähnt.

Mittels Auswertung können die von einer Ortungsvorrichtung bereitgestellten Messdaten und/oder Messsignale vorteilhaft hinsichtlich interessierender Informationen gezielt untersucht werden. Bevorzugt sind anschließend interpretierte und/oder aufbereitete Ortungsdaten, insbesondere Informationen, beispielsweise Richtungsinformationen, Ja-/Nein-Informationen, Tiefeninformationen, Materialinformationen oder dergleichen zu unter der Untersuchungsoberfläche verborgenen Ortungsobjekten verfügbar. Aus diesen ausgewerteten Ortungsdaten wird mittels Zuordnung zu Positionsdaten die zumindest eine weitere zumindest zweidimensionale Karteninformation bestimmt. Folglich weist die zumindest eine weitere zumindest zweidimensionale Karteninformation besonders intuitiv verständliche Informationen zu unter der Untersuchungsoberfläche verborgenen Ortungsobjekten auf. Auf diese Weise kann ein Ortungsgerät realisiert werden, dessen ermittelte zumindest eine weitere zumindest zweidimensionale Karteninformation besonders intuitiv interpretierbar und verständlich ist. Insbesondere kann ein Benutzer des Ortungsgeräts besonders gut bei der Interpretation der ersten zumindest zweidimensionalen Karteninformation unter Verwendung der zumindest einen weiteren zumindest zweidimensionalen Karteninformation unterstützt werden, sodass ein geringer Schulungs- oder Einlernaufwand zur Benutzung des Ortungsgeräts erforderlich ist.

In einer vorteilhaften Ausführungsform des erfindungsgemäßen Ortungsgeräts, insbesondere eines handgehaltenen Ortungsgeräts, weist die Auswertevorrichtung ein Datenverbesserungsmodul auf. Das Datenverbesserungsmodul kann zu einem Ausgleich von Werteschwankungen mittels statistischer Methoden und/oder zu einer Verbesserung eines Kontrasts vorgesehen sein. Dieses Datenverbesserungsmodul kann zu diesem Zweck eine Vielzahl von Berechnungsroutinen aufweisen, die insbesondere statistische Funktionen, beispielsweise zur Berechnung statistischer Momente, umfassen. Bevorzugt kann das Datenverbesserungsmodul eingesetzt werden, beim Ergänzen und/oder Verfeinern und/oder Aktualisieren von Ortungsinformationen statistische Auswertungen wie beispielsweise Gewichtungen, Mittelwertberechnungen von Daten oder dergleichen durchzuführen und somit eine verbesserte Auswertung von Ortungsdaten zu gewährleisten. Insbesondere können werden aus den Ortungsdaten durch Interpolation und/oder Extrapolation weitere Ortungsdaten ermittelt werden, die Messpositionen entsprechen, die mittels des Ortungsgeräts noch nicht vermessen wurden. Unter Interpolation sollen hier alle Arten von bekannten Interpolationsalgorithmen verstanden werden. Beispiele derartiger Interpolationsalgorithmen stellen lineare und/oder höhere, insbesondere nicht-lineare Interpolationsalgorithmen dar, insbesondere Interpolationsalgorithmen basierend auf einer Delaunay-Triangulation, basierend auf Kriging- oder Inverse-Distance-Weighting, sowie Interpolationsalgorithmen basierend auf einer Voronoi-Interpolation (Nächste-Nachbar-Interpolation). Ferner können prinzipiell auch Radar- und/oder Ultraschall-Bildgebungsmethoden wie eine "Synthetic-Aperture-Focusing-Technique" (SAR, SAFT) Anwendung finden.

Insbesondere kann derart beispielsweise eine der weiteren zumindest zweidimensionalen Karteninformationen auch eine positionsabhängige Information darüber beinhalten, ob gemessene Ortungsdaten und/oder berechnete Ortungsdaten und/oder eine Mehrzahl an Ortungsdaten oder dergleichen für eine Position vorliegt. Auf diese Weise kann diese weitere zumindest zweidimensionale Karteninformation dazu genutzt werden, die Bereiche, für die Ortungsdaten bereits vorliegen, zu markieren.

In einer bevorzugten Ausführungsform des bildgebenden Ortungsgeräts ist die Auswertevorrichtung dazu vorgesehen, Ortungsdaten der ersten Ortungsvorrichtung und/oder zumindest einer weiteren Ortungsvorrichtung und/oder die erste zumindest zweidimensionale Karteninformation und/oder die zumindest eine weitere zumindest zweidimensionale Karteninformation unter Anwendung von Bildbearbeitungsalgorithmen und/oder elektronischen Filtern und/oder digitalen Filtern, insbesondere spektralen Filtern, auszuwerten.

Bildbearbeitungsalgorithmen und/oder elektronische Filter, insbesondere spektrale Filter, stellen bevorzugte Ausführungsformen von Auswerteroutinen der Auswertevorrichtung dar. Unter Bildbearbeitungsalgorithmen sind dabei Routinen und Funktionen zu verstehen, die aus der computergestützten Bearbeitung von digitalen Bildern, Dokumenten oder dergleichen bekannt sind. Derartige Routinen betreffen dort beispielsweise typische Aspekte von Bilden, unter anderem zum Beispiel Belichtung, Schärfe und Unschärfe, Kontrast, Bildrauschen oder dergleichen. Derartige Auswerteroutinen lassen sich vorteilhaft auch auf Ortungsdaten, insbesondere zumindest zweidimensionale Karteninformationen, anwenden und bevorzugt zur Erhöhung der Qualität und/oder Dichte einer enthaltenen Information einsetzen.

In einem Ausführungsbeispiel umfassen die Bildbearbeitungsalgorithmen insbesondere Routinen zum Bestimmen zusammenhängender Strukturen, insbesondere Kanten. Derartige Routinen sind bekannt und können beispielsweise auf Kantendetektionsalgorithmen nach dem Sobel-Algorithmus und/oder dem Canny- Algorithmus und/oder unter Verwendung eines Kantendetektionsfilters nach Prewitt und/oder Roberts und/oder Laplace arbeiten.

Unter elektronischen Filtern sind insbesondere aus der Elektrotechnik und/oder der Nachrichtentechnik bekannte Schaltungen zu verstehen, die ein elektrisches Signal, insbesondere ein Messsignal und/oder Messdaten, abhängig von einer Frequenz in der Amplitude und in der Phasenlage verändern können, sodass Signalanteile gezielt modifiziert, insbesondere abgeschwächt und/oder unterdrückt werden können. Beispielsweise stellen ein Hochpass, ein Bandpass, ein Tiefpass oder dergleichen derartige elektronische Filter dar. Unter Anwendung derartiger Filter können die erste und/oder die zumindest eine weitere zumindest zweidimensionale Karteninformation spektral zerlegt und gefiltert werden.

Es sei darauf hingewiesen, dass derartige elektronische Filter prinzipiell auch computergestützt implementiert sein können, beispielsweise als softwaretechnische Umsetzung. In diesem Falle bilden die softwareimplementierten Filter ebenfalls Bildbearbeitungsalgorithmen.

Die zur Bestimmung der ersten zumindest zweidimensionalen Karteninformation und der zumindest einen weiteren zumindest zweidimensionalen Karteninformation verwendeten Ortungsdaten können erfindungsgemäß also auf unterschiedliche Weise ermittelt und/oder erzeugt werden. Ortungsdaten können insbesondere als unmittelbare Ortungsdaten einer Ortungsvorrichtung - und damit eingeschlossen auch als Ortungsdaten unterschiedlicher Kategorien einer Ortungsvorrichtung in Folge unterschiedlicher Anwendung oder Verwendung der Ortungsvorrichtung - ermittelt und/oder erzeugt werden. Darüber hinaus können Ortungsdaten alternativ oder zusätzlich als ausgewertete Ortungsdaten ermittelt und/oder erzeugt werden. Auf diese Weise steht eine vorteilhaft breite Auswahl an verwendbaren Ortungsdaten zur Verfügung, die unterschiedliche Informationen über unter einer Untersuchungsoberfläche verborgene Ortungsobjekte bereitstellen und/oder enthalten.

Im Folgenden werden nochmals einige beispielhafte Ausführungsformen von Ortungsdaten für unterschiedliche Ortungsvorrichtungen vorgestellt.

Unter Verwendung einer einen Induktivsensor aufweisenden Ortungsvorrichtung, insbesondere einen Induktivsensor mit harmonischem Anregungsfeld, lassen sich als Ortungsdaten unterschiedlicher Kategorie der Ortungsvorrichtung eine Amplitude und eine Phase einer Empfangsspannung in Abhängigkeit einer Anregungsfrequenz detektieren und auswerten. Beide Messsignale, insbesondere beide Ortungsdaten unterschiedlicher Kategorie, hängen unmittelbar von einer Leitfähigkeit und einer magnetischen Permeabilität von unter der Untersuchungsoberfläche verborgenen Ortungsobjekten ab und lassen Rückschlüsse auf Materialeigenschaften zu. Bevorzugt kann unter Verwendung der genannten Ortungsdaten unterschiedlicher Kategorie eine Unterscheidung von ferromagnetischen Ortungsobjekten, beispielsweise aus Eisen, und nichtferromagnetischen Ortungsobjekten beispielsweise aus Kupfer, durchgeführt werden.

Unter Verwendung einer einen Kapazitivsensor aufweisenden Ortungsvorrichtung, lassen sich als Ortungsdaten unterschiedlicher Kategorie der Ortungsvorrichtung beispielsweise ein Wert der Kapazität oder dessen Änderung (allgemein Impedanz) für eine, bevorzugt mehrere unterschiedliche Elektroden, bestimmen. Ferner können bei der Verwendung mehrerer, insbesondere symmetrisch angeordneter, Elektroden Summen und/oder Differenzen von Kapazitätsänderungen berechnet werden, die zur Ermittlung von Objekteigenschaften, insbesondere von Holzbalken, ausgewertet werden können. Beispielsweise lassen sich aus Summen und Differenzen von Kapazitätsänderungen Kanten und/oder Mitten georteter Ortungsobjekte ermitteln.

Unter Verwendung einer einen 50/60 Hz-Sensor aufweisenden Ortungsvorrichtung lassen sich als Ortungsdaten unterschiedlicher Kategorie der Ortungsvorrichtung ein Wert oder dessen Änderung eines auf einer Elektrode, bevorzugt mehrere Werte oder deren Änderung auf mehreren Elektroden, induzierten 50/60 Hz-Wechselsignals bestimmen. Aus diesen Ortungsdaten kann durch Vergleich der Ortungsdaten mehrerer Elektroden vorteilhaft eine Information über eine absolute Größe des elektromagnetischen 50/60 Hz-Wechselfeldes ausgewertet werden. Alternativ oder zusätzlich kann eine Information über eine geometrische Lage des Maximums des elektromagnetischen 50/60-Hz-Wechselfeldes relativ zu den Elektroden ausgewertet werden und somit beispielsweise über die Position einer stromführenden Leitung. Alternativ oder zusätzlich kann eine Information über die Ausrichtung des Verlaufs des Maximums des elektromagnetischen 50/60-Hz-Wechselfeldes ausgewertet werden und somit beispielsweise die Orientierung einer stromführenden Leitung.

Unter Verwendung einer einen Radarsensor aufweisenden Ortungsvorrichtung lassen sich als Ortungsdaten unterschiedlicher Kategorie der Ortungsvorrichtung beispielsweise eine Laufzeit eines Radarpulses, ein Reflexionskoeffizient, eine Phasendifferenz, ein Reflexionskoeffizient in unterschiedlichen Detektionsrichtungen unter Verwendung einer Antenne mit elektrischer Richtbarkeit, ein Reflexionskoeffizient von unter unterschiedlicher Polarisationsrichtung ausgestrahlter elektromagnetischer Strahlung oder dergleichen bestimmen. Aus diesen Ortungsdaten lassen sich vielzählige Informationen über die unter einer Untersuchungsoberfläche verborgenen Ortungsobjekte ableiten, insbesondere auswerten. Aus der Laufzeit kann beispielsweise eine Tiefe eines Ortungsobjekts ausgewertet werden. Aus einem Reflexionskoeffizient an einer Reflexionsstelle, insbesondere einem Ortungsobjekt, kann ein Rückschluss auf die Art des Ortungsobjektes ausgewertet werden. Aus Reflexionskoeffizienten in unterschiedlichen Detektionsrichtungen kann, ähnlich wie beim Kapazitivsensor, auf Mitten und/oder Kanten von Ortungsobjekten geschlossen werden. Aus Reflexionskoeffizient von unter unterschiedlicher Polarisationsrichtung ausgestrahlter elektromagnetischer Strahlung kann eine Orientierung von ausgedehnten Ortungsobjekten, beispielsweise von Bewehrungsstahlstreben, Metallrohren, Kunststoffrohren oder dergleichen, ausgewertet werden.

In einer bevorzugten Ausführungsform des bildgebenden Ortungsgeräts ist die Auswertevorrichtung dazu vorgesehen, die erste zumindest zweidimensionale Karteninformation und die zumindest eine weitere zumindest zweidimensionale Karteninformation in Echtzeit zu bestimmen.

Unter Echtzeit soll in diesem Zusammenhang insbesondere verstanden werden, dass eine Verarbeitungsgeschwindigkeit der Auswertevorrichtung einer Umpositionierungsgeschwindigkeit, insbesondere einer Verfahrgeschwindigkeit, des Ortungsgeräts durch den Benutzer entspricht, d.h. der Benutzer kann die von ihm mit dem Ortungsgerät ausgeführte Bewegung direkt einer Änderung einer Karteninformation zuordnen. Die Auswertevorrichtung ist dazu vorgesehen, jeweils aktuell übermittelte Ortungsdaten und Positionsdaten anzunehmen und zwischen zwei Verarbeitungszyklen empfangene Daten von der Verarbeitung auszuschließen. Vorzugsweise vermittelt das Ortungsgerät dem Benutzer den Eindruck, dass die Verarbeitung der Ortungsdaten, insbesondere eine Auswertung der Ortungsdaten, bevorzugt die Bestimmung der ersten zumindest zweidimensionalen Karteninformation und der zumindest einen weiteren zumindest zweidimensionalen Karteninformation zumindest im Wesentlichen verzögerungsfrei erfolgt. Werden die zumindest zweidimensionalen Karteninformationen mittels einer Anzeigevorrichtung des Ortungsgeräts an einen Benutzer des Ortungsgeräts ausgegeben, so vermittelt das Ortungsgerät dem Benutzer vorteilhaft den Eindruck, dass die Anzeigevorrichtung des Ortungsgeräts die zumindest zweidimensionalen Karteninformationen zumindest im Wesentlichen verzögerungsfrei wiedergibt. Dadurch kann der Benutzer Ortungsobjekte besonders schnell und sicher erkennen und es kann ein besonders effizientes Ortungsgerät bereitgestellt werden.

In einer vorteilhaften Ausführungsform ist eine Bestimmung und Bereitstellung der zumindest zweidimensionalen Karteninformationen lediglich durch eine geräteinterne Verarbeitungsrate, d.h. insbesondere durch Signalübertragungsgeschwindigkeiten sowie eine Auswertegeschwindigkeit, begrenzt. Insbesondere ist eine Verarbeitungsrate von Ortungsdaten und Positionsdaten, die von der Auswertevorrichtung angenommen wird, an eine Verarbeitungsgeschwindigkeit der Auswertevorrichtung angepasst. Somit bleiben Daten, die von der Auswertevorrichtung nicht unmittelbar verarbeitet werden können, unberücksichtigt. Durch eine derart hohe Verarbeitungsrate kann bei dem Benutzer des Ortungsgeräts der Eindruck entstehen, dass Ortungsdaten für einen mit dem Ortungsgerät überfahrenen Bereich unmittelbar ausgewertet und als zumindest zweidimensionale Karteninformationen bereitgestellt werden. Unter einer Bestimmung und Bereitstellung der zumindest zweidimensionalen Karteninformationen in Echtzeit ist insbesondere dann auszugehen, wenn die geräteinterne Verarbeitungsdauer bis zur fertiggestellten Bestimmung der zumindest zweidimensionalen Karteninformationen, insbesondere der Darstellung der zumindest zweidimensionalen Karteninformationen mittels der Anzeigevorrichtung weniger als 2 Sekunden, bevorzugt weniger als 1 Sekunde, besonders bevorzugt weniger als 0.5 Sekunde beträgt.

Das Ortungsgerät weist zumindest eine Anzeigevorrichtung auf, die dazu vorgesehen ist, die erste zumindest zweidimensionale Karteninformation und/oder die zumindest eine weitere zumindest zweidimensionale Karteninformation als Karte darzustellen.

Die Anzeigevorrichtung ist dazu vorgesehen, zumindest einen Ausschnitt einer zweidimensionalen Karteninformation als Karte darzustellen und anzuzeigen. Unter der Anzeigevorrichtung soll in diesem Zusammenhang insbesondere eine Vorrichtung verstanden werden, die ein flächiges, zweidimensionales Anzeigeelement aufweist, das zu einer bildhaften Anzeige bzw. Ausgabe von zumindest zweidimensionalen Karteninformationen in Form einer Karte vorgesehen ist. Die Anzeigevorrichtung ist dazu mit der Auswertevorrichtung und/oder mit der Steuervorrichtung des Ortungsgeräts zur Übermittlung von zumindest zweidimensionalen Karteninformationen und/oder von Karten verbunden. Die Anzeigevorrichtung kann dabei mittels Datenkabeln oder drahtlos mit der Auswertevorrichtung und/oder mit der Steuervorrichtung verbunden sein. Es ist denkbar, dass die Auswertevorrichtung in der Anzeigevorrichtung integriert ist oder dass die Anzeigevorrichtung auch mit Komponenten der Auswertevorrichtung als ein einzelnes Bauteil ausgeführt ist. Das flächige Anzeigeelement der Anzeigevorrichtung kann vorteilhaft beispielsweise als eine Flüssigkristallanzeige, eine OLED-Anzeige, eine LED-Anzeige, ein Bildschirm, der für eine andere geeignete Anzeigetechnik vorgesehen ist, oder als ein Projektor realisiert sein. Es ist auch denkbar, dass die Anzeige 3D-fähig ausgebildet ist und Mittel umfasst, die dazu vorgesehen sind, bei einem Benutzer einen dreidimensionalen Bildeindruck zu vermitteln. Vorzugsweise ist die Anzeigevorrichtung zur Darstellung von Graustufen, besonders bevorzugt zur Darstellung von Farben vorgesehen. Bevorzugt kann somit eine zumindest zweidimensionale Karteninformation als Karte unter Verwendung einer Farb- oder Graustufencodierung an einen Benutzer des Ortungsgeräts ausgegeben werden. Durch Darstellung und Ausgabe der Ortungsinformation an einen Benutzer des Ortungsgeräts mittels der Anzeigevorrichtung kann ein besonders kompaktes, flexibles und unmittelbar einsetzbares Ortungsgerät bereitgestellt werden.

In einer bevorzugten Ausführungsform ist die Anzeigevorrichtung dazu vorgesehen, zumindest zweidimensionale Karteninformationen in Form von insbesondere mehrdimensionalen Matrizen, Tabellen, Arrays, Listen oder dergleichen zu verarbeiten und zur Darstellung in Form einer Karte oder zumindest eines Ausschnitts einer Karte anzupassen und/oder umzuwandeln. Die Anzeigevorrichtung ist insbesondere dazu vorgesehen ist, Ortungsinformationen in ein Darstellungsattribut zur bildhalten Wiedergabe umzusetzen, wie beispielsweise in eine Grauwertstufe, einen Grauwert eines Grauwerteverlaufs, eine Farbwertstufe, einen Farbwert eines Farbverlaufs, eine Helligkeitsstufe, einen Helligkeitswert eines Helligkeitsverlaufs, eine Sättigungsstufe oder einen Sättigungswert eines Sättigungsverlaufs und/oder ein Muster und/oder ein Symbol.

Grundsätzlich ist auch denkbar, dass die Anzeigevorrichtung nur getrennt von dem Ortungsgerät ausgebildet ist und über eine drahtlose Verbindung zu einer Übermittlung von Ausgabewerten verbunden ist, beispielsweise über eine Punkt-zu-Punkt Verbindung, ad-hoc Verbindung, eine WLAN-Verbindung, eine Bluetooth-Verbindung oder dergleichen.

Ferner ist die Anzeigevorrichtung dazu vorgesehen, durch eine hohe Verarbeitungsrate und Darstellungsrate bei einem Benutzer des Ortungsgeräts den Eindruck zu erwecken, dass Ortungsdaten für einen mit dem Ortungssensor überfahrenen Bereich unmittelbar, bevorzugt in Echtzeit, ausgewertet und als Ortungs- und/oder Karteninformation dargestellt werden. Mit einer Darstellung in Echtzeit ist insbesondere gemeint, dass die geräteinterne Verarbeitungsdauer durch die Anzeigevorrichtung bis zur fertigen Darstellung der Ortungsinformation auf dem Anzeigeelement weniger als 2 Sekunden, bevorzugt weniger als 1 Sekunde, besonders bevorzugt weniger als 0.5 Sekunde beträgt.

Die Anzeigevorrichtung ist vorgesehen, eine Karte als bildhafte Darstellung der ersten zumindest zweidimensionalen Karteninformation und der zumindest einen weiteren zumindest zweidimensionalen Karteninformation, auszugeben. Unter einer bildhaften Darstellung oder Anzeige soll in diesem Zusammenhang eine optische, im Wesentlichen maßstäbliche und positionsaufgelöste Wiedergabe der Ortungsdaten verstanden werden. Vorteilhaft gibt die dargestellte Karte die Untersuchungsoberfläche hinsichtlich des durch Umpositionieren des Ortungsgeräts untersuchten Bereichs der Untersuchungsoberfläche wieder. Die Karte gibt zumindest die erste zumindest zweidimensionale Karteninformation und die zumindest eine weitere zumindest zweidimensionale Karteninformation bildhaft wieder.

Nicht unter die Erfindung fallend kann ein angezeigter Ausschnitt einer Ortungsinformation, insbesondere einer zumindest zweidimensionalen Karteninformation, einen Abbildungsmaßstab aufweisen, der einem Verhältnis von Erstreckungen der Karteninformation im Anzeigeelement zu Erstreckungen eines zugeordneten Bereichs der Untersuchungsoberfläche entspricht. Der Abbildungsmaßstab weist vorteilhafterweise einen gleichen Abbildungsmaßstab für eine erste Dimension und für eine zweite Dimension auf. Besonders bevorzugt ist der Abbildungsmaßstab durch einen Benutzer des Ortungsgeräts veränderbar, sodass eine im Anzeigeelement dargestellte Karteninformation vergrößert oder verkleinert und somit gezoomt werden kann.

Alternativ oder zusätzlich sind auch andere Darstellungsmaßstäbe denkbar. Insbesondere können sowohl maßstäbliche als auch unmaßstäbliche Darstellungen zur Ausgabe an einen Benutzer des Ortungsgeräts verwendet werden.

Bevorzugt ist die bildhafte Anzeige zu einer Interpretation durch einen menschlichen Betrachter vorgesehen. In einer bevorzugten Ausführungsform wird die Karte als ein zweidimensionales Bild ausgegeben, das ein Abbild der Ortungsverhältnisse unter der Untersuchungsoberfläche darstellt. Der Karte ist bevorzugt unmittelbar zu entnehmen, an welchen Stellen der Untersuchungsoberfläche, d.h. insbesondere unter welchen Richtungen von der Ortungsvorrichtung aus gesehen, Ortungsobjekte detektiert werden. Eine an einen Benutzer ausgegebene Karte gibt ein maßstabgetreues 1:1-Abbild der unter der Ortungsvorrichtung verborgenen Ortungsverhältnisse wieder. Auf diese Weise ist eine besonders einfache Übertragung von Positionen georteter Ortungsobjekte, die der Karte entnommen werden können, auf das Werkstück möglich. Ein in der Karte angezeigtes Ortungsobjekt befindet sich dann vom Benutzer aus gesehen genau an entsprechender Stelle unmittelbar hinter der Ortungsvorrichtung, verborgen unter der Untersuchungsoberfläche. Unter Verwendung der mittels der Anzeigevorrichtung dargestellten Karte ist es dem Benutzer des Ortungsgeräts möglich, die erste zumindest zweidimensionale Karteninformation und die zumindest eine weitere zumindest zweidimensionalen Karteninformation, durch sukzessives Überstreichen der Untersuchungsoberfläche mit dem Ortungsgerät zu generieren und gleichzeitig darzustellen. Somit erhält der Benutzer des Ortungsgeräts eine auf intuitive Weise interpretierbare Karte, aus der Ortungsinformationen betreffend die Untersuchungsoberfläche zu entnehmen sind. Mit einer sukzessiven Vermessung einer Untersuchungsoberfläche in Folge eines Umpositionierens des Ortungsgeräts bezogen auf die Untersuchungsoberfläche erhält der Benutzer des Ortungsgeräts eine übersichtliche, intuitiv und einfach interpretierbare, zumindest zweidimensionale Karte.

Es sei angemerkt, dass die Anzeigevorrichtung, insbesondere das Anzeigeelement, neben der Ausgabe einer Karte ebenfalls vorgesehen sein kann, alle zur Bedienung und Steuerung des Ortungsgeräts relevanten, notwendigen und/oder sinnvollen Arbeitsparameter anzuzeigen.

In einer bevorzugten Ausführungsform des bildgebenden Ortungsgeräts ist die zumindest eine Anzeigevorrichtung dazu vorgesehen, die erste zumindest zweidimensionale Karteninformation und/oder die zumindest eine weitere zumindest zweidimensionale Karteninformation als synthetische Elemente aufweisende Karte, insbesondere Linien, Striche, gefüllte Polygone, schraffierte Polygone, teilweise transparente Polygone, Symbole aufweisende Karte, darzustellen.

Die dargestellte Karte kann grundsätzlich synthetische Daten und/oder Elemente wie beispielsweise ein Gitternetz, Symbole, Linien, Farbverfremdungen, Schattierungen oder dergleichen aufweisen. Beispielsweise kann die Anzeigevorrichtung zur Anzeige einer Ortungsrichtung, einer Ortungsgenauigkeit, einer eine Interpretation der Ortungsinformation vereinfachenden Symbolik, zur Anzeige von Bedienhinweisen oder dergleichen vorgesehen sein. Beispielsweise können - in Abhängigkeit einer darzustellenden Information - ausgewertete Ortungsdaten bevorzugt mittels synthetischer Daten und/oder Elemente dargestellt oder repräsentiert werden. Dabei stellen die synthetischen Daten und/oder Elemente insbesondere vereinfachte und intuitiv verständliche Interpretationshilfen und/oder Darstellungshilfen dar, die einem Benutzer des Ortungsgeräts die Interpretation und Bewertung der mittels der Anzeigevorrichtung dargestellten Karte, insbesondere der Ortungsergebnisse, erleichtert.

In einer bevorzugten Ausführungsform können beispielsweise geometrische Elemente wie Linien, Quadrate, Rechtecke oder dergleichen verwendet werden, um ermittelte Kantenverläufe von georteten Ortungsobjekten zu markieren und somit besonders deutlich darzustellen. Somit kann insbesondere ein Kontrast der Ortungsobjektkontur und insbesondere der wesentlichen, den Benutzer interessierenden Ortungsinformationen vorteilhaft erhöht werden.

Die Anzeigevorrichtung ist dazu vorgesehen, die erste zumindest zweidimensionale Karteninformation und die zumindest eine weitere zumindest zweidimensionale Karteninformation zu einer gemeinsamen Karte zu überlagern.

Erfindungsgemäß lassen sich zumindest zweidimensionale Karteninformationen somit von der Anzeigevorrichtung überlagern. Insbesondere ist unter der Überlagerung von zumindest zweidimensionalen Karteninformationen die Überlagerung, Überblendung, Kombination oder dergleichen der aus den jeweiligen zumindest zweidimensionalen Karteninformationen generierten Karten zu verstehen. Auf diese Weise kann eine kombinierte Ortungsinformation in Form einer "gemeinsamen Karte", die die entsprechenden, in den jeweiligen zumindest zweidimensionalen Karteninformationen enthaltenen Ortungsinformationen, zumindest berücksichtigt, bevorzugt enthält, realisiert werden. Die gemeinsame Karte ist dazu vorgesehen, mittels der Anzeigevorrichtung an einen Benutzer des Ortungsgeräts ausgegeben zu werden.

In einer zusätzlichen bevorzugten Ausführungsform des bildgebenden Ortungsgeräts ist die Auswertevorrichtung dazu vorgesehen, die erste zumindest zweidimensionale Karteninformation und die zumindest eine weitere zumindest zweidimensionale Karteninformation zu einer gemeinsamen Karteninformation zu kombinieren, insbesondere zumindest teilweise zu kombinieren.

Erfindungsgemäß lassen sich - analog zur Überlagerung von zumindest zweidimensionalen Karteninformationen mittels der Anzeigevorrichtung - die erste zumindest zweidimensionale Karteninformation und die zumindest eine weitere zumindest zweidimensionale Karteninformation mittels der Auswertevorrichtung zu einer gemeinsamen Karteninformation kombinieren. Ein Kombinieren der ersten zumindest zweidimensionalen Karteninformation und der zumindest einen weiteren zumindest zweidimensionalen Karteninformation zu einer gemeinsamen Karteninformation kann bevorzugt in Form von einer Vorverarbeitung, Vorkonditionierung, Kombination, Ergänzung, Erweiterung, Präzisierung, Verfeinerung, Anreicherung, Überlagerung, Gewichtung, Nachbereitung, Fusion oder dergleichen erfolgen. Die "gemeinsame Karteninformation" berücksichtigt, bevorzugt enthält die in den jeweiligen zumindest zweidimensionalen Karteninformationen enthaltenen Ortungsinformationen, sodass eine vorteilhaft umfassende Karteninformation erzeugt werden kann. Die gemeinsame Karteninformation stellt ebenfalls eine zumindest zweidimensionale Karteninformation dar, die bevorzugt zur Darstellung in Form einer Karte mittels der Anzeigevorrichtung vorgesehen ist.

Derart können Informationen betreffend die Ortung von unter einer Untersuchungsoberfläche verborgenen Ortungsobjekten, d.h. insbesondere die erste zumindest zweidimensionale Karteninformation und die zumindest eine weitere zumindest zweidimensionale Karteninformation oder die aus den jeweiligen Karteninformationen erhaltenen Karten, kombiniert und überlagert werden. Mit anderen Worten wird somit ermöglicht, Informationen betreffend die Ortung von unter einer Untersuchungsoberfläche verborgenen Ortungsobjekten zu kombinieren und zu überlagern, die erfindungsgemäß auf unterschiedliche Weise ermittelt und/oder erzeugt werden. Insbesondere können Informationen kombiniert und überlagert werden, die als unmittelbare Ortungsdaten einer Ortungsvorrichtung - und damit eingeschlossen auch als Ortungsdaten unterschiedlicher Kategorien einer Ortungsvorrichtung in Folge unterschiedlicher Anwendung oder Verwendung der Ortungsvorrichtung - oder die als ausgewertete Ortungsdaten ermittelt und/oder erzeugt werden. Auf diese Weise kann die vorteilhaft breite Auswahl an verwendbaren Ortungsdaten, die jeweils unterschiedliche, insbesondere redundante und nicht-redundante bzw. ergänzende, Informationen über unter einer Untersuchungsoberfläche verborgene Ortungsobjekte beinhalten, einem Benutzer des Ortungsgeräts zur Verfügung gestellt werden. Die gemeinsamen Karteninformation bzw. die gemeinsame Karte weisen bevorzugt eine hohe Ortungsqualität, eine hohe Informationsdichte und eine intuitiv verständliche Darstellungsweise auf, mittels der ein Benutzer besonders gut bei der Interpretation der die Ortung von unter der Untersuchungsoberfläche verborgenen Ortungsobjekten betreffenden Information unterstützt werden kann. Vorteilhaft wird der Benutzer des Ortungsgeräts somit bei der Benutzung des bildgebenden Ortungsgeräts vor Fehlern, insbesondere einer fehlerhaften Interpretation der Ortungsergebnisse, geschützt. Ferner ist eine Bedienung des Ortungsgeräts intuitiv und mit hohem Bedienkomfort möglich, sodass ein geringer Schulungs- oder Einlernaufwand zur Benutzung des Ortungsgeräts erforderlich ist. Insbesondere kann ein besonders effizient und intuitiv nutzbares Ortungsgerät bereitgestellt werden, da das Ortungsgerät in kurzer Zeit umfassende, bevorzugt hochaufgelöste Ortungsinformationen erfassen kann. Insbesondere stellt das Ortungsgerät neben klassischen, die Ortung betreffenden Ortungsergebnissen auch Zusatzinformationen zusammen mit Ortungsergebnissen dar. Dadurch ist ein besonders effizienter Ortungsvorgang realisierbar. Ferner können unterschiedliche Merkmale der Ortungsobjekte erfasst und zu einer Klassifizierung der Ortungsobjekte verwendet werden.

In einem Ausführungsbeispiel steht dem Benutzer des Ortungsgeräts somit ein Ortungsgerät zur Verfügung, das ermöglicht, mit lediglich einem Ortungsvorgang eine besonders umfassende Information betreffend die Ortung von unter einer Untersuchungsoberfläche verborgenen Ortungsobjekten zu erhalten. So kann beispielsweise neben der Aussage, ob an einer gewählten Position auf der Untersuchungsoberfläche eine Bohrung ohne Beschädigung von unter der Untersuchungsoberfläche verborgenen Ortungsobjekten durchgeführt werden kann, insbesondere auch eine Aussage über die Qualität und/oder Zuverlässigkeit der Ortungsdaten, eine Aussage über eine Tiefe und/oder eine Position und/oder eine Ausrichtung von Ortungsobjekten, eine Aussage über das Material von Ortungsobjekten, eine Aussage über eine Leitfähigkeit und/oder eine magnetische Suszeptibilität von Ortungsobjekten und/oder eine Aussage über andere, einem Fachmann als sinnvoll erscheinende Eigenschaften von Ortungsobjekten getroffen werden. Bevorzugt werden diese Informationen mittels Darstellung einer die Informationen kombinierenden und/oder überlagernden gemeinsamen Karte an den Benutzer des Ortungsgeräts ausgegeben.

In einer vorteilhaften Ausführungsform des bildgebenden Ortungsgeräts ist die Auswertevorrichtung dazu vorgesehen, bei der Kombination der ersten zumindest zweidimensionalen Karteninformation und der zumindest einen weiteren zumindest zweidimensionalen Karteninformation zu einer gemeinsamen Karteninformation Ortungsdaten zu interpolieren und/oder zu extrapolieren und/oder zu gewichten und/oder auszuschließen.

Auf diese Weise kann besonders schnell eine insbesondere umfangreiche Ortungsinformation, insbesondere eine gemeinsame zumindest zweidimensionale Karteninformation, bereitgestellt werden. Fehlmessungen können ausgeglichen werden und es kann eine hohe Qualität der Ortungsinformation erreicht werden. Insbesondere ein Gewichten von Ortungsdaten kann in vorteilhafter Weise genutzt werden, um eine hohe Qualität der gemeinsamen Karteninformation zu erreichen. Unter gewichten soll in diesem Zusammenhang insbesondere verstanden werden, dass Informationen einer der zumindest zweidimensionalen Karteninformationen bei der Erzeugung der gemeinsamen Karteninformation mit einem Gewichtungsfaktor belegt werden. Insbesondere kann der Gewichtungsfaktor auch null sein. In diesem Fall bleiben entsprechende Informationen im Rahmen der Kombination unberücksichtigt, beispielsweise Daten, die als ein Messfehler oder als irrelevant eingestuft werden. Auf diese Weise kann eine besonders nutzerfreundliche, d.h. insbesondere besonders intuitiv verständliche, gemeinsame Karteninformation und/oder Karte erzeugt und dem Benutzer des Ortungsgeräts ausgegeben werden.

In einer vorteilhaften Ausführungsform des bildgebenden Ortungsgeräts sind zu kombinierende und/oder zu überlagernde zumindest zweidimensionale Karteninformationen wählbar und/oder einstellbar. Insbesondere können die zu kombinierenden und/oder zu überlagernden zumindest zweidimensionalen Karteninformationen manuell durch den Benutzer des Ortungsgeräts wählbar und/oder einstellbar, insbesondere auch abwählbar sein. Dazu kann der Benutzer beispielsweise in einem Menü oder mittels eines Bedienelementes einer Eingabevorrichtung des Ortungsgeräts die zu kombinierenden zumindest zweidimensionalen Karteninformationen auswählen und/oder einstellen. Auf diese Weise kann vorteilhaft eine an eine Anwendung und/oder eine Messaufgabe und/oder eine Ortungssituation und/oder an interessierende Ortungsinformationen angepasste Kombination und/oder Überlagerung von zumindest zweidimensionalen Karteninformationen erfolgen. Beispielsweise kann ein Benutzer zwischen einer kombinierten Darstellung von die Existenz und das Material von unter einer Untersuchungsoberfläche verbogenen Ortungsobjekten betreffende Ortungsinformation sowie einer kombinierten Darstellung von die Existenz und die Ortungstiefe von unter einer Untersuchungsoberfläche verbogenen Ortungsobjekten betreffende Ortungsinformation wählen.

Alternativ oder zusätzlich können die zu kombinierenden und/oder zu überlagernden zumindest zweidimensionalen Karteninformationen automatisch durch das Ortungsgerät, insbesondere die Auswertevorrichtung und/oder die Steuervorrichtung und/oder die Anzeigevorrichtung, wählbar und/oder einstellbar sein. Somit kann bevorzugt eine optimale Anpassung der darzustellenden Karte an eine Anwendung und/oder eine Messaufgabe und/oder eine Messsituation durchgeführt werden. Insbesondere kann einer Fehlbedienung durch einen unerfahrenen Benutzer entgegengewirkt werden. Ferner wird ein Betrieb des Ortungsgeräts beschleunigt und eine intuitive Bedienung des Ortungsgeräts gefördert.

Je nach Anwendung, Messaufgabe, Ortungssituation und/oder interessierender Ortungsinformation kann erfindungsgemäß eine angepasste Darstellung der Ortungsinformationen in Form einer mittels der Anzeigevorrichtung ausgegebenen Karte erfolgen. Vorteilhaft kann somit ein besonders flexibel einsetzbares und zielgerichtet betreibbares Ortungsgerät realisiert werden.

In einer vorteilhaften Ausführungsform des bildgebenden Ortungsgeräts ist die Anzeigevorrichtung dazu vorgesehen, den angezeigten Ausschnitt der Karte in Abhängigkeit von Positionsdaten des Ortungsgeräts zu variieren.

Bevorzugt verschiebt oder vergrößert die Anzeigevorrichtung den angezeigten Ausschnitt der Karte, wenn die aktuell dem Ortungsgerät zugeordneten Positionsdaten einen Randbereich des angezeigten Ausschnitts der Karte erreichen. Vorzugsweise weist der Randbereich eine Breite von 5 Prozent, bevorzugt 10 Prozent und besonders bevorzugt 15 Prozent einer Gesamterstreckung des angezeigten Ausschnitts auf.

In einer vorteilhaften Ausführungsform des bildgebenden Ortungsgeräts ist die Anzeigevorrichtung dazu vorgesehen, den angezeigten Ausschnitt der Karte in Bezug auf eine Position des Ortungsgeräts zu fixieren, insbesondere zu zentrieren. Somit wird die Karte bei einer Umpositionierung des Ortungsgeräts auf der Untersuchungsoberfläche derart verschoben und/oder rotiert, dass die aktuelle Position des Ortungsgeräts stets - bezogen auf den angezeigten Ausschnitt der Karte - fixiert, insbesondere zentriert, ist. Unter "fixieren" oder "zentrieren" soll in diesem Zusammenhang insbesondere dynamisch fixieren bzw. zentrieren verstanden werden, d.h. während eines Ortungsvorgangs den angezeigten Ausschnitt der Karte der Position des Ortungsgeräts nachführend. Mit anderen Worten ist die Position des Ortungsgeräts in der dem Benutzer dargestellten Karte stets an einem vordefinierten Punkt fixiert, insbesondere mittig zentriert. Bei einer Umpositionierung des Ortungsgeräts auf der Untersuchungsoberfläche wird die dargestellte Karte zur Aufrechterhaltung dieser Fixierung, insbesondere Zentrierung, verschoben. Auf diese Weise kann ein besonders intuitiv benutzbares Ortungsgerät bereitgestellt werden, das eine intuitive und fehlerunanfällige Orientierung des Benutzers in vorteilhafter Weise unterstützt. Vorteilhaft wird dem Benutzer des Ortungsgeräts somit stets ein der tatsächlichen Position des Ortungsgeräts bezogen auf die Untersuchungsoberfläche intuitiv zuordenbarer Ausschnitt der Karte ausgegeben.

Bevorzugt ist die fixierte, insbesondere zentrierte Position der Ortungsvorrichtung in der dem Benutzer dargestellten Karte markiert. Eine derartige Markierung kann beispielsweise durch ein Symbol in Form eines Fadenkreuzes, eines Rechtecks, eines Quadrats oder dergleichen realisiert sein. Besonders bevorzugt wird die entsprechende Position durch eine maßstabsgetreue Repräsentation und/oder Silhouette des Ortungsgeräts und/oder der Ortungsvorrichtung und/oder des Ortungssensors und/oder des aktiven Sensorbereiches des Ortungssensors wiedergegeben. Ferner ist denkbar, die fixierte und/oder zentrierte Darstellung betreffende Parameter der Anzeige durch einen Benutzer einstellbar und/oder wählbar zu gestalten. Insbesondere kann derart beispielsweise ein Koordinatenpaar frei eingestellt werden, das definiert, an welcher Stelle des Anzeigeelements die Position die Markierung bezogen auf den angezeigten Ausschnitt der Karte fixiert und dargestellt wird.

In einer alternativen vorteilhaften Ausführungsform des bildgebenden Ortungsgeräts ist die Anzeigevorrichtung dazu vorgesehen, eine aktuelle Position des Ortungsgeräts entsprechend einer Umpositionierung des Ortungsgeräts bezogen auf die Untersuchungsoberfläche in dem angezeigten Ausschnitt der Karte nachzuführen. Somit kann ein Benutzer des Ortungsgeräts die aktuelle Position des Ortungsgeräts unmittelbar mit dem angezeigten Ausschnitt der Karte korrelieren, da eine markierte Position des Ortungsgeräts auf der angezeigten Karte in Abhängigkeit der Umpositionierung des Ortungsgeräts bezogen auf die Untersuchungsoberfläche verändert wird. Bevorzugt bleibt dabei der angezeigte Ausschnitt der Karte im Wesentlichen erhalten, es sei denn, der Benutzer verlässt mit dem Ortungsgerät den Bereich der in dem angezeigten Ausschnitt der Karte wiedergegebenen Untersuchungsoberfläche.

Bevorzugt ist es dem Benutzer des Ortungsgeräts möglich, zwischen den beiden Darstellungsmöglichkeiten zu wechseln, beispielsweise durch eine Veränderung der Systemeinstellungen des Ortungsgeräts.

In einer zusätzlichen Ausführungsform des bildgebenden Ortungsgeräts ist die Anzeigevorrichtung dazu vorgesehen, die angezeigte Karte in Abhängigkeit von den Positionsdaten des Ortungsgeräts zu skalieren. Dadurch kann ein besonders flexibel einsetzbares Ortungsgerät bereitgestellt werden, da Ortungsobjekte besonders schnell geortet werden können und eine Ortung auf einen besonders relevanten Bereich begrenzt werden kann. Unter skalieren soll in diesem Zusammenhang insbesondere verstanden werden, dass die Anzeigevorrichtung einen Abbildungsmaßstab anpasst und insbesondere eine Auflösung vergrößert und/oder verfeinert und kleinere Details sichtbar macht. Alternativ oder zusätzlich kann die Anzeigevorrichtung einen Abbildungsmaßstab auch derart anpassen, dass eine Auflösung verkleinert wird und weniger kleine Details sichtbar sind. Unter einem Abbildungsmaßstab ist ein Verhältnis von Erstreckungen der dargestellten Karte zu Erstreckungen eines zugeordneten Bereichs der Untersuchungsoberfläche zu verstehen. Es ist denkbar, dass die Anzeigevorrichtung den Abbildungsmaßstab in Abhängigkeit aller erfassten Positionsdaten bestimmt, oder dass die Anzeigevorrichtung den Abbildungsmaßstab in Abhängigkeit von zuletzt erfassten Positionsdaten bestimmt und den Abbildungsmaßstab vergrößert, wenn der Benutzer das Ortungsgerät in einem beschränken Bereich der Untersuchungsoberfläche bewegt. Unter "zuletzt" soll innerhalb eines festlegbaren, zurückliegenden Zeitintervalls verstanden werden, beispielsweise innerhalb der jeweils letzten 30 Sekunden oder dergleichen.

In einer zusätzlichen Ausführungsform des bildgebenden Ortungsgeräts ist die Anzeigevorrichtung dazu vorgesehen, den dargestellten Ausschnitt der Karte in Abhängigkeit von einer Verfahrgeschwindigkeit des Ortungsgeräts zu skalieren und/oder eine Auflösung zu verändern. Dadurch kann ein besonders flexibel einsetzbares Ortungsgerät bereitgestellt werden, da Ortungsobjekte besonders schnell geortet werden können und eine Ortung auf einen besonders relevanten Bereich begrenzt werden kann. Bevorzugt entspricht einer hohen Verfahrgeschwindigkeit ein kleiner Abbildungsmaßstab und die Anzeigevorrichtung zeigt einen großen Bereich der Untersuchungsoberfläche in dem Anzeigeelement an, während einer geringen Verfahrgeschwindigkeit ein großer Abbildungsmaßstab entspricht und die Anzeigevorrichtung einen kleinen Bereich der Untersuchungseinheit mit einer entsprechend höheren und/oder verfeinerten Auflösung anzeigt.

In einer bevorzugten Ausführungsform des bildgebenden Ortungsgeräts ist die Anzeigevorrichtung dazu vorgesehen, den angezeigten Ausschnitt der Karte manuell, d.h. in Abhängigkeit einer Benutzereingabe, zu verändern, insbesondere zu verschieben, zu vergrößern, zu verkleinern, zu drehen oder dergleichen. Auf diese Weise erhält der Benutzer des Ortungsgeräts die Möglichkeit, insbesondere nach Durchführung der Ortung, sich einen detaillierten Überblick über die georteten Ortungsobjekte zu verschaffen. Beispielsweise kann sich der Benutzer ihn interessierende Bereiche der Karte im Detail, d.h. vergrößert, anschauen. Die Veränderung des angezeigten Ausschnitts der Karte, insbesondere ein Verschieben, Vergrößern, Verkleinern, Drehen oder dergleichen, des angezeigten Ausschnitts der Karte, kann beispielsweise unter Verwendung der Eingabevorrichtung, der Ausgabevorrichtung oder aber auch unter Verwendung des Positionssensors als Eingabehilfe realisiert sein. Derart kann der Benutzer des Ortungsgeräts beispielsweise durch Verfahren des Ortungsgeräts auf der Untersuchungsoberfläche eine Veränderung des angezeigten Ausschnitts der Karte bewirken, die ihm, analog zur Durchführung der tatsächlichen Ortung, eine offline-Begutachtung bereits ermittelter Karteninformationen und somit der unter der Untersuchungsoberfläche verborgenen Ortungsobjekte ermöglicht.

In einer bevorzugten Ausführungsform des bildgebenden Ortungsgeräts ist die Anzeigevorrichtung dazu vorgesehen, eine Markierung in dem angezeigten Ausschnitt der Karte darzustellen, die einem Merkmal des Ortungsgeräts zugeordnet ist und somit die Position dieses Merkmals in der dargestellten Karte repräsentiert. Insbesondere kann es sich bei dem Merkmal um das Zentrum des Ortungssensors, die Umrisse der Ortungsvorrichtung, insbesondere des Ortungsgeräts, eine definierte Markierungsvorrichtung, insbesondere eine Anzeichenstelle, des Ortungsgeräts oder dergleichen handeln. Auf diese Weise kann die Position des Merkmals des Ortungsgeräts auf leichte und eindeutige Weise direkt in Bezug zu dem dargestellten Ausschnitt der Karte gesetzt werden. Beispielsweise kann somit eine zur Kennzeichnung oder Markierung einer interessierenden Position auf der Untersuchungsoberfläche vorgesehene Markierungsvorrichtung, insbesondere eine Anzeichenstelle, des Ortungsgeräts mit dem von der Anzeigevorrichtung dargestellten Ausschnitt der Karte in Bezug gesetzt werden. Befindet sich beispielsweise die die Markierungsvorrichtung, insbesondere die Anzeichenstelle, repräsentierende Markierung in der dargestellten Karte über einem Ortungsobjekt, so befindet sich die Markierungsvorrichtung, insbesondere die Anzeichenstelle, des Ortungsgeräts bezogen auf die Untersuchungsoberfläche ebenfalls über dem Ortungsobjekt.

Unter einer "Anzeichenstelle" ist insbesondere eine in dem Ortungsgerät vorgesehene Aussparung zu verstehen, die einer beispielsweise mit einem Stift durchzuführenden, definierten Anzeichnung einer Kennzeichnung oder Positionsmarkierung auf der Untersuchungsoberfläche dient.

Ferner ist denkbar, dass ein Benutzer des Ortungsgeräts zwischen verschiedenen Markierungen, die verschiedenen Merkmalen des Ortungsgeräts zugeordnet sind, wählen und/oder umschalten kann. In einer Ausführungsform des Ortungsgeräts kann somit insbesondere vorgesehen sein, zwischen verschiedenen Markierungsvorrichtungen, insbesondere Anzeichenstellen, die beispielsweise an unterschiedlichen Positionen des Ortungsgeräts vorgesehen sind, zu wählen und/oder umzuschalten.

Ferner wird ein erfindungsgemäßes Verfahren zum Betrieb des bildgebenden Ortungsgeräts vorgeschlagen, wie in Anspruch 9 angegeben.

In einer bevorzugten Ausführungsform des Verfahrens kann das Verfahren insbesondere durch zumindest einen der folgenden Schritte gekennzeichnet sein:
- Aufsetzens des Ortungsgeräts auf einer Untersuchungsoberfläche;
- Umpositionieren des Ortungsgeräts bezogen auf die Untersuchungsoberfläche, insbesondere Verfahren oder Überstreichen der Untersuchungsoberfläche mit dem Ortungsgerät;

### Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreiche Merkmale in Kombination.

Gleiche Bezugszeichen in den Figuren bezeichnen gleiche Elemente.

Es zeigen:
- Figur 1: eine perspektivische Seitenansicht einer Ausgestaltung eines erfindungsgemäßen Ortungsgeräts,
- Figur 2: eine Aufsicht auf dieselbe Ausgestaltung des erfindungsgemäßen Ortungsgeräts,
- Figur 3: eine schematische Seitenansicht einer Ausgestaltung eines erfindungsgemäßen Ortungsgeräts,
- Figur 4: eine schematische Darstellung einer Ausführungsform des Ortungsgeräts während seiner Anwendung an einem zu untersuchenden Gegenstand,
- Figur 5: eine schematische Darstellung eines zu untersuchenden Gegenstands mit unter dessen Untersuchungsoberfläche verborgenen Ortungsobjekten
- Figur 6: eine schematische Darstellung verschiedener, unter Anwendung des erfindungsgemäßen Ortungsgeräts erzeugter Kartendarstellungen (a-f) des zu untersuchenden Gegenstands aus Figur 5
- Figur 7: eine schematische Darstellung einer Ausführungsform eines erfindungsgemäßen Verfahrens in einem Verfahrensdiagramm

### Beschreibung der Ausführungsbeispiele

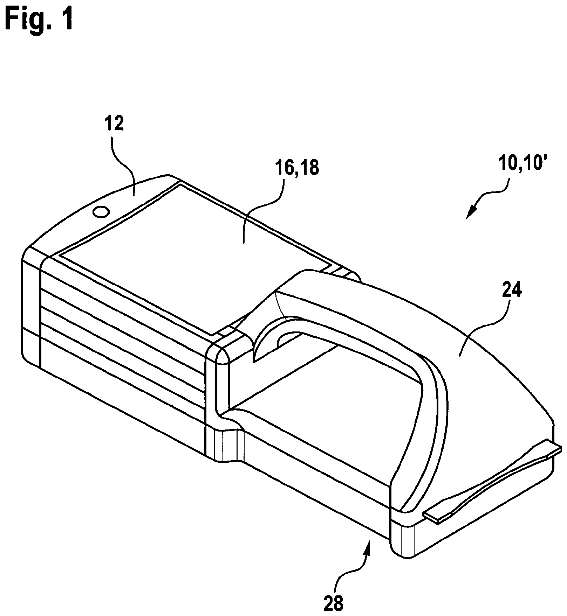

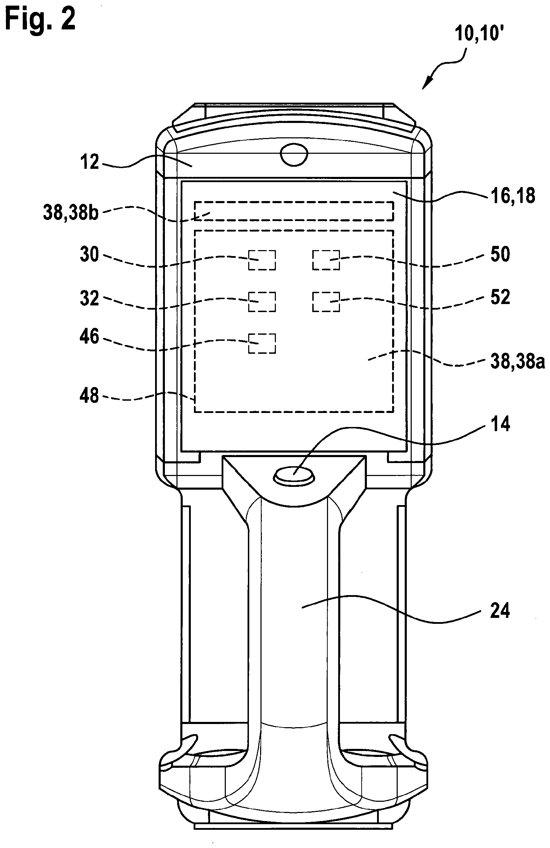

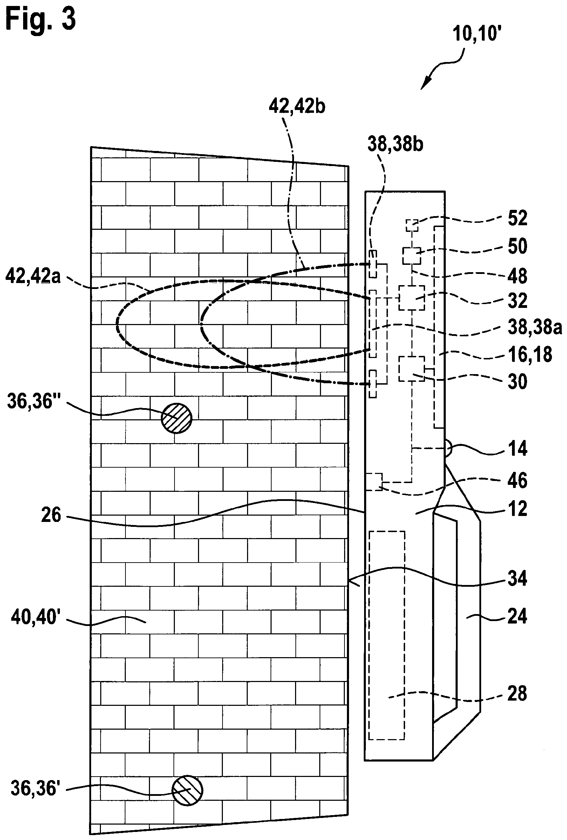

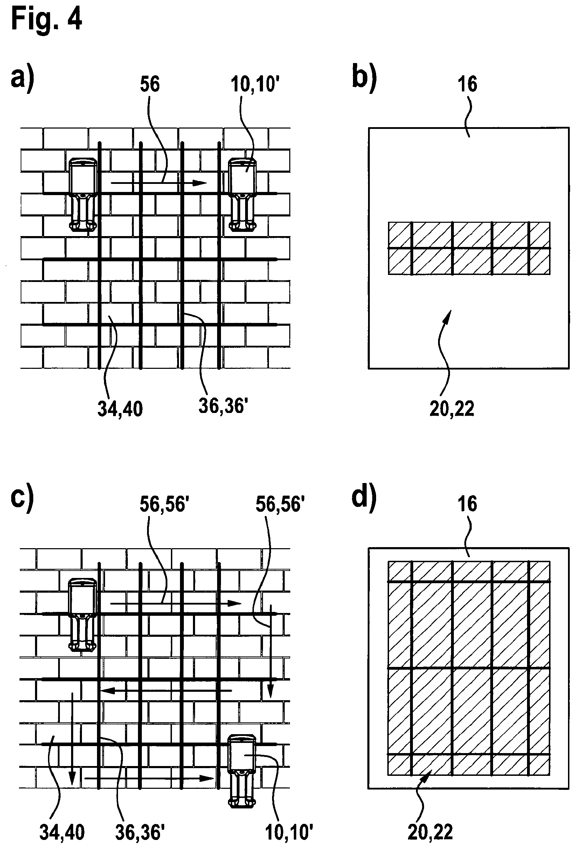

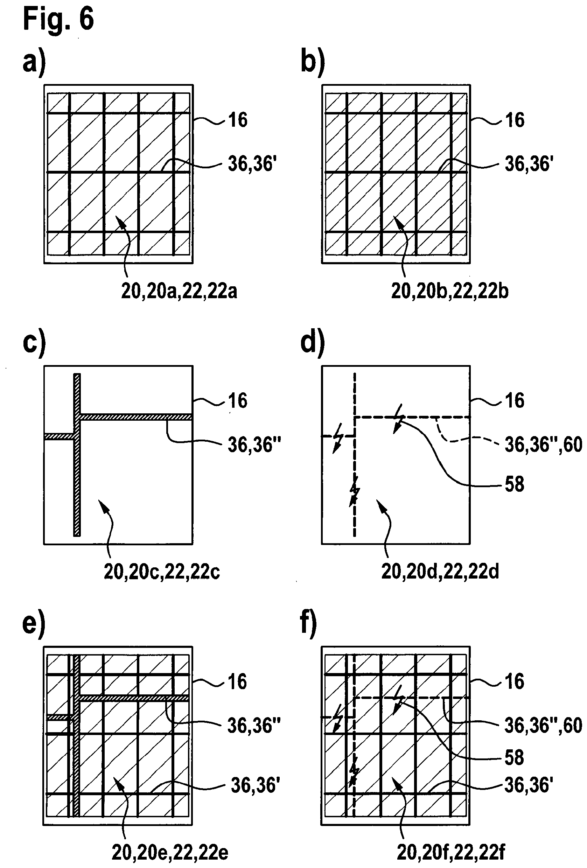

Figur 1 und Figur 2 zeigen zwei Ansichten einer beispielhaften Ausführungsform eines erfindungsgemäßen bildgebenden Ortungsgeräts 10 in perspektivischer Darstellung bzw. in vereinfachter, schematischer Aufsicht. In Figur 3 ist die erfindungsgemäße Ausführungsform des Ortungsgeräts 10 in einer vereinfachten schematischen Seitenansicht dargestellt. Das dargestellte Ortungsgerät 10 ist als ein handgehaltenes Ortungsgerät 10' realisiert. Das beispielhaft ausgeführte Ortungsgerät 10 weist ein Gehäuse 12, eine Eingabevorrichtung in Form von Betätigungselementen 14, geeignet zum Ein- und Ausschalten des Ortungsgeräts 10, sowie eines berührungssensitiven Anzeigeelements 16 zum Starten und Konfigurieren eines Messvorgangs und zum Eingeben von Arbeitsparametern auf. Das berührungssensitive Anzeigeelement 16 ist Teil einer Anzeigevorrichtung 18, die ferner der Darstellung und Ausgabe von Arbeitsparametern und/oder Auswerteergebnissen, insbesondere von zumindest zweidimensionalen Karteninformationen 20 in Form von Karten 22, insbesondere zumindest zweidimensionalen Karten 22, dient (vgl. insbesondere Figur 4 und Figur 6).

Das Ortungsgerät 10 verfügt zum Transport und zu dessen Führung über einen Handgriff 24. Der Handgriff 24, die Betätigungselemente 14 sowie das Anzeigeelement 16 befinden sich auf einer Gehäuseseite des Ortungsgeräts 10, die bei einer Bedienung des Ortungsgeräts 10 typischerweise dem Benutzer zugewandt ist.

Zur Energieversorgung des Ortungsgeräts 10 weist das Ortungsgerät 10 auf der Geräterückseite 26, d.h. der das Anzeigeelement 16 aufnehmenden Geräteseite geräterückseitig gegenüberliegenden Geräteseite, eine Aussparung auf, die zur Aufnahme zumindest eines stromnetzunabhängigen Energiespeichers 28, insbesondere Batterien oder wiederaufladbaren Akkus, vorgesehen ist. Das beispielhaft vorgestellte Ortungsgerät 10 besitzt Lithium-Ionen-Akkus, deren hohe Energie- und Leistungsdichte vorteilhaft zur Energieversorgung des Ortungsgeräts 10 geeignet ist. In einer alternativen Ausführungsform kann der Energiespeicher 28 auch im Handgriff 24 des Ortungsgeräts 10 untergebracht sein. Vorzugsweise weist der Energiespeicher 28 eine lösbare Formschluss- und/oder Kraftschlussverbindungsschnittstelle auf, sodass der zumindest eine Energiespeicher 28 abnehmbar und austauschbar an oder in dem Ortungsgerät 10 anordenbar ist. Darüber hinaus lässt sich der Energiespeicher 28 in und/oder außerhalb des Ortungsgeräts 10 mit Energie aus einem Stromnetz versorgen und laden.

De Eingabevorrichtung, bestehend aus Betätigungselementen 14 sowie dem berührungssensitiven Anzeigeelement 16, dient der Eingabe von für den Betrieb des Ortungsgeräts 10 nötigen und/oder sinnvollen Arbeitsparametern durch einen Benutzer des Ortungsgeräts 10. Die Komponenten der Eingabevorrichtung sind zur Übermittlung von Benutzereingaben mit einer Auswertevorrichtung 30 und/oder einer Steuervorrichtung 32 verbunden. Die Auswertevorrichtung 30 und/oder die Steuervorrichtung 32 sind/ist dazu vorgesehen, die Benutzereingaben auszuwerten und insbesondere Parameter zur Steuerung des Ortungsgeräts und/oder zur Erzeugung und Modifikation einer die Ortung betreffenden Information, insbesondere einer Karteninformation 20, anzupassen. Beispielsweise lässt sich über eine Benutzereingabe das Ortungsgerät und/oder ein Ortungsvorgang starten, eine Farbskala und/oder ein Abbildungsmaßstab einer mittels der Anzeigevorrichtung 18 dargestellten Karte 22 anpassen, eine oder mehrere mittels der Anzeigevorrichtung 18 in Form einer Karte 22 darzustellenden zumindest zweidimensionalen Karteninformationen 20 wählen, oder dergleichen.

Die Anzeigevorrichtung 18 ist dazu vorgesehen, eine Ortungsinformation darzustellen, insbesondere zumindest einen Ausschnitt einer zweidimensionalen Karteninformation 20 als Karte 22 darzustellen und anzuzeigen, vorzugsweise maßstäblich darzustellen und anzuzeigen. Die Anzeigevorrichtung 18 ist prinzipiell auch dazu vorgesehen, in einem Betriebszustand eine gesamte zweidimensionale Karte 22 anzuzeigen. Die Anzeigevorrichtung 18 ist mit der Auswertevorrichtung 30 zur Übermittlung von zumindest zweidimensionalen Karteninformationen 20 verbunden, die in Form von mehrdimensionalen Matrizen oder dergleichen von der Auswertevorrichtung 30 zur Verfügung gestellt werden und von der Anzeigevorrichtung 18 zur Darstellung in Form einer Karte 22 oder zumindest eines Ausschnitts einer Karte 22 angepasst und/oder umgewandelt werden. Die Anzeigevorrichtung 18 ist dazu vorgesehen, die zumindest zweidimensionalen Karteninformationen 20 in ein Darstellungsattribut zur bildhalten Wiedergabe umzusetzen, wie beispielsweise in eine Grauwertstufe, einen Grauwert eines Grauwerteverlaufs, eine Farbwertstufe, einen Farbwert eines Farbverlaufs, eine Helligkeitsstufe, einen Helligkeitswert eines Helligkeitsverlaufs, eine Sättigungsstufe oder einen Sättigungswert eines Sättigungsverlaufs und/oder ein Muster und/oder ein Symbol. Die Anzeigevorrichtung 18 weist ein Anzeigeelement 16 zur Anzeige der Karte 22 auf. In dem vorliegenden Ausführungsbeispiel ist das Anzeigeelement 16 als ein farbfähiges OLED-Display ausgebildet. Die Anzeigevorrichtung 18, insbesondere das Anzeigeelement 16, ist als ein Teil des Ortungsgeräts 10 ausgebildet und in das Gehäuse 12 des Ortungsgeräts 10 integriert. Grundsätzlich ist es auch denkbar, dass die Anzeigevorrichtung 18, insbesondere das Anzeigeelement 16, getrennt von dem Ortungsgerät 10 ausgebildet ist und über eine drahtlose Verbindung zu einer Übermittlung von Ausgabewerten verbunden ist, beispielsweise über eine Punkt-zu-Punkt ad-hoc Verbindung, eine WLAN-Verbindung, eine Bluetooth-Verbindung oder dergleichen. Insbesondere kann die Anzeigevorrichtung 18 in einer weiteren Ausführungsform auch weitere Anzeigeelemente 16' aufweisen, die getrennt von dem Anzeigeelement 16 für die Karte 22 ausgebildet sind.

Mittels der Anzeigevorrichtung 18 des Ortungsgeräts 10 lassen sich eine erste zumindest zweidimensionale Karteninformation 20a und zumindest eine weitere zumindest zweidimensionale Karteninformation 20b,20c,20d als Karte 22 darstellen (vgl. insbesondere Figur 6a bis Figur 6d). Dazu überlagert die Anzeigevorrichtung 18 die erste zumindest zweidimensionale Karteninformation 20a und die zumindest eine weitere zumindest zweidimensionale Karteninformation 20b,20c,20d zu einer gemeinsamen Karte 22e,22f (vgl. insbesondere Figuren 6e und 6f). Der von der Anzeigevorrichtung 18, insbesondere dem Anzeigeelement 16, angezeigte Ausschnitt einer Karte 22 weist einen Abbildungsmaßstab auf, der einem Verhältnis von Erstreckungen der Karte 22 im Anzeigeelement 16 zu Erstreckungen eines zugeordneten Bereichs einer Untersuchungsoberfläche 34 entspricht (vgl. insbesondere Figur 4). Der Abbildungsmaßstab weist einen gleichen Abbildungsmaßstab für eine erste Richtung und für eine zweite, insbesondere zur ersten Richtung orthogonale Richtung auf. Die Anzeige der zumindest zweidimensionalen Karte 22 ist unabhängig von der Orientierung des Ortungsgeräts 10 auf der Untersuchungsoberfläche 34 (vgl. insbesondere Figur 3). Somit stellt die dargestellte Karte 22 unabhängig von der Orientierung des Ortungsgeräts 10 unter der Untersuchungsoberfläche 34 geortete Ortungsobjekte 36 lagegetreu dar. Die dargestellte Karte 22 wird bei einer Drehung des Ortungsgeräts 10 entgegen der Richtung der Drehbewegung rotiert, sodass die dargestellte Karte 22 auch unter Drehung des Ortungsgeräts 10 die unter der Untersuchungsoberfläche 34 georteten Ortungsobjekte 36 lagegetreu wiedergibt.

Es sei darauf hingewiesen, dass in dem beschriebenen Ausführungsbeispiel eine zumindest zweidimensionale Karteninformation 20 mittels der Anzeigevorrichtung 18 in eine Karte 22 umgewandelt wird. In diesem Sinne können in diesem konkreten Ausführungsbeispiel die Begriffe "zumindest zweidimensionale Karteninformation" und "Karte" weitgehend parallel oder synonym im Sinne von "ineinander umwandelbar" verwendet werden.

Die Anzeigevorrichtung 18 ist ferner zur Ausgabe oder Darstellung weiterer notwendiger, nützlicher und/oder sinnvoller Informationen vorgesehen, beispielsweise zur Ausgabe einer Ortungsrichtung, einer Ortungsgenauigkeit, einer Bedienungsanleitung, eines Betriebsmenüs oder dergleichen. Die Anzeigevorrichtung 18 ermöglicht es ferner, eine zumindest zweidimensionale Karteninformation 20 als synthetische Elemente aufweisende Karte 22 (vgl. insbesondere Karte 22d in Figur 6d) darzustellen. Derartige synthetische Elemente stellen beispielsweise Linien, Kästen, anderweitige geometrische Formen, Muster, Symbole oder dergleichen dar.

Das Ortungsgerät 10 weist eine erste Ortungsvorrichtung 38a sowie eine zweite Ortungsvorrichtung 38b auf, wobei beide Ortungsvorrichtungen 38a und 38b vorgesehen sind, Ortungsdaten zu unter einer Untersuchungsoberfläche 34 verborgenen Ortungsobjekten 32 zu erfassen. Die beiden Ortungsvorrichtungen 38a,38b sind in dem Gehäuse 12 des Ortungsgeräts 10 untergebracht, sodass die Ortungsvorrichtungen 38a,38b in einem montierten Zustand des Ortungsgeräts 10 durch das Gehäuse 12 gehalten und geschützt sind.

In dem gezeigten Ausführungsbeispiel ist die erste Ortungsvorrichtung 38a als eine Sende- und Empfangseinheit für elektromagnetische Strahlung, insbesondere als eine nicht näher dargestellte LCR-Antenne, ausgebildet. Die LCR-Antenne ist zur Abstrahlung von elektromagnetischer Strahlung auf der einem Benutzer des Ortungsgeräts 10 abgewandten Geräterückseite 26 vorgesehen. Dazu umfasst die erste Ortungsvorrichtung 28 zumindest ein nicht näher dargestelltes Antennenelement sowie eine ebenfalls nicht näher dargestellte Antennensteuerung zur Ansteuerung der LCR-Antenne. Wie in Figur 3 im schematischen Schnitt dargestellt, sendet die erste Ortungsvorrichtung 38a, insbesondere die LCR-Antenne, in das zu untersuchende Werkstück 40 eindringende elektromagnetische Signale auf der Geräterückseite 26 aus, dargestellt in Form eines Erfassungsbereichs 42a (Empfangskeule) der ersten Ortungsvorrichtung 38a. Im Inneren des Werkstücks 40 reflektierte und/oder gestreute Signale, insbesondere von einem unter der Untersuchungsoberfläche 34 verborgenen Ortungsobjekt 36 zumindest teilweise reflektierte elektromagnetische Strahlung, wird mittels der Antenne der ersten Ortungsvorrichtung 38a detektiert. Dabei werden elektromagnetische Eigenschaften des unter der Untersuchungsoberfläche 34 angeordneten Volumens zumindest in dem Erfassungsbereich 42a der ersten Ortungsvorrichtung 38a erfasst. Mittels der reflektierten elektromagnetischen Strahlung erfasste elektromagnetische Eigenschaften betreffen insbesondere eine elektrische oder magnetische Leitfähigkeit oder eine elektrische oder magnetische Suszeptibilität der unter der Untersuchungsoberfläche 34 verborgenen Ortungsobjekte 36. Die erste Ortungsvorrichtung 38a ist unmittelbar hinter der dem Benutzer bei Anwendung des Ortungsgeräts 10 abgewandten Gehäuseseite im Innern des Gehäuses 12 angeordnet. Auf diese Weise kann die erste Ortungsvorrichtung 38a bei Anwendung des Ortungsgeräts 10, insbesondere bei einem Aufsetzen des Ortungsgeräts 10 auf einer zu untersuchenden Untersuchungsoberfläche 34, vorteilhaft nahe an der Untersuchungsoberfläche 34 positioniert werden. Durch ein Aussenden und ein Empfangen eines Ortungssignals der ersten Ortungsvorrichtung 38a bestimmt die erste Ortungsvorrichtung 38a eine Distanz zwischen der LCR-Antenne und einem Ortungsobjekt 36 sowie eine Information über die Existenz und laterale Position des Ortungsobjekts 36. Die Ortungsdaten betreffend die Existenz sowie die Ortungsdaten betreffend die Distanz, insbesondere Ortungstiefe, von unter einer Untersuchungsoberfläche 34 verborgenen Ortungsobjekten 36 stellen dabei Ortungsdaten einer ersten Kategorie beziehungsweise einer zweiten Kategorie der ersten Ortungsvorrichtung 38a dar. Aus diesen Ortungsdaten können jeweils in Folge einer Zuordnung von Ortungsdaten zu Positionsdaten des Ortungsgeräts 10 bezogen auf die Untersuchungsoberfläche 34 durch die Auswertevorrichtung 30 eine erste zumindest zweidimensionale Karteninformation 20a betreffend die Existenz von Ortungsobjekten sowie eine zweite zumindest zweidimensionale Karteninformation 20b betreffend die Ortungstiefe von Ortungsobjekten 36 (vgl. insbesondere Figur 6a und 6b) bestimmt werden. Beispielsweise lassen sich unter Verwendung der ersten Ortungsvorrichtung 38a Ortungsobjekte wie Armierungsstäbe 36', metallische Einschlüsse oder dergleichen in einem zu untersuchenden Werkstück 40, insbesondere einer zu untersuchenden Wand 40', orten.

Die zweite Ortungsvorrichtung 38b ist in dem dargestellten Ausführungsbeispiel als eine nicht näher dargestellte AC-Antenne ausgebildet, die dazu vorgesehen ist, niederfrequente Wechselspannung, insbesondere Spannung mit einer Frequenz kleiner als 100 kHz, vorteilhaft kleiner als 10 kHz, besonders vorteilhaft kleiner als 1 kHZ, in einem Werkstück 40 zu detektieren. Vorzugsweise ist die AC-Antenne dazu vorgesehen, eine Netzspannung mit 50 Hz und/oder 60 Hz zu orten. Dazu weist die AC-Antenne zwei nicht näher dargestellte Elektroden, die als metallische, elektrisch leitende Schichten ausgebildet sind, sowie ferner eine ebenfalls nicht näher dargestellte Steuereinheit auf. Die Steuereinheit dient der Ansteuerung und dem Betrieb der AC-Antenne. Insbesondere weist die zweite Ortungsvorrichtung 38b einen Erfassungsbereich 42b auf, der sich im Wesentlichen senkrecht zu der Geräterückseite 26 des Ortungsgeräts 10 in das zu untersuchende Werkstück 40 erstreckt. Mittels der zweiten Ortungsvorrichtung 38b, insbesondere der AC-Antenne, können vorteilhaft Wechselspannungssignale von unter einer Untersuchungsoberfläche 34 verborgenen Ortungsobjekten 36, insbesondere von unter einer Untersuchungsoberfläche 34 verborgenen stromführenden Leitungen 36", detektiert werden. Somit sind mittels der zweiten Ortungsvorrichtung 38b stromführende Leitungen 36", insbesondere Wechselstrom führende Leitungen 36", in einem zu untersuchenden Werkstück 40, insbesondere beispielsweise einer zu untersuchenden Wand 40', ortbar. Die zweite Ortungsvorrichtung 38b, insbesondere deren Elektroden, ist unmittelbar hinter der dem Benutzer bei Anwendung des Ortungsgeräts 10 abgewandten Gehäuseseite im Innern des Gehäuses 12 angeordnet. Auf diese Weise kann auch die zweite Ortungsvorrichtung 38b bei Anwendung des Ortungsgeräts 10, insbesondere bei einem Aufsetzen des Ortungsgeräts 10 auf einer zu untersuchenden Untersuchungsoberfläche 34, vorteilhaft nahe an der Untersuchungsoberfläche 34 positioniert werden. Ein in einem Bereich unter der Untersuchungsoberfläche 34 angeordnetes Ortungsobjekt 36, insbesondere eine Wechselstrom führende Leitung 36", induziert oder bewirkt in der zweiten Ortungsvorrichtung 38b ein elektromagnetisches Feld, das insbesondere im Vergleich zu einem Bereich, der frei von einem solchen Ortungsobjekt 36 ist, detektiert werden kann. Die zweite Ortungsvorrichtung 38b ist dazu vorgesehen, eine solches elektromagnetisches Feld und/oder eine Änderung eine solchen elektromagnetischen Felds in einem kontinuierlichen Wertebereich zu erfassen. Diese Ortungsdaten betreffen somit Informationen über die stromführenden Eigenschaften von unter einer Untersuchungsoberfläche 34 verborgenen Ortungsobjekten 36 und stellen Ortungsdaten einer ersten Kategorie der zweiten Ortungsvorrichtung 38b dar. Aus diesen Ortungsdaten kann in Folge einer Zuordnung der Ortungsdaten zu Positionsdaten des Ortungsgeräts 10 bezogen auf die Untersuchungsoberfläche 34 durch die Auswertevorrichtung 30 zumindest eine weitere, dritte zumindest zweidimensionale Karteninformation 20c betreffend die Ortung von stromführenden Ortungsobjekten 36, insbesondere Leitungen 36", bestimmt werden (vgl. insbesondere Figur 6c). Beispielsweise lassen sich unter Verwendung der zweiten Ortungsvorrichtung 38b Ortungsobjekte 36 wie elektrische Leitungen 36", Kabel, oder dergleichen in einem zu untersuchenden Werkstück 40, insbesondere einer zu untersuchenden Wand 40', orten.

Das Ortungsgerät 10 umfasst des Weiteren einen Positionssensor 46, der dazu vorgesehen ist, Positionsdaten des Ortungsgeräts 10 bezogen auf die Untersuchungsoberfläche 34 zu erfassen. Der Positionssensor 46 ist in einem montierten Zustand des Ortungsgeräts 10 in der Gehäusewand auf der Geräterückseite 26 aufgenommen. Mittels des Positionssensors 46 kann das Ortungsgerät 10 eine Ausrichtungsänderung und/oder eine Positionsänderung des Ortungsgeräts 10 bezogen auf die Untersuchungsoberfläche 34 eines zu untersuchenden Werkstücks 40 detektieren (vgl. insbesondere Figur 3). Der Positionssensor 46 erfasst insbesondere eine Bewegung des Ortungsgeräts 10 sowie eine zurückgelegte Distanz und/oder Richtung und erlaubt somit Ortungsdaten in Bezug zu einer Position des Ortungsgeräts 10, insbesondere bezogen auf die Untersuchungsoberfläche 34, zu setzen. Insbesondere erlaubt der Positionssensor 46 darüber hinaus, eine Rotation des Ortungsgeräts 10 um eine Achse, die bezogen auf die Untersuchungsoberfläche 34 senkrecht verläuft, zu detektieren. In dem dargestellten Ausführungsbeispiel ist der Positionssensor 46 als ein optischer Wegaufnehmer ausgebildet, der in der bei Anwendung des Ortungsgeräts 10 dem zu untersuchenden Werkstück 40 zugewandten Gehäusewand der Geräterückseite 26 angeordnet ist.

Wie in Figur 3 dargestellt ist, wird das Ortungsgerät 10 zur Durchführung einer Ortung eines unter einer Untersuchungsoberfläche 34 verborgenen Ortungsobjekts 36 mit der Geräterückseite 26 flächig in unmittelbarer Nähe zu der Untersuchungsoberfläche 34, insbesondere in Berührung zu der Untersuchungsoberfläche 34, positioniert. Das Ortungsgerät 10 ist dabei dazu vorgesehen, von Hand an und/oder über die Untersuchungsoberfläche 34 geführt zu werden. Dabei wird das Ortungsgerät 10 mit der Geräterückseite 26 in unmittelbarer Nähe an die zu untersuchende Untersuchungsoberfläche 34 derart positioniert, dass der Abstand zwischen der Geräterückseite 26 und der Untersuchungsoberfläche 34 minimiert ist. Auf diese Weise wird erreicht, dass die Erfassungsbereiche 42a und 42b von der ersten Ortungsvorrichtung 38a bzw. der zweiten Ortungsvorrichtung 38b in das zu untersuchende Werkstück 40 eindringen können. In Folge eines Umpositionierens, insbesondere Verfahrens oder Verschiebens des Ortungsgeräts 10 auf dem Werkstück 40, wird eine Positionsänderung des Ortungsgeräts 10 detektiert. Entsprechende Positionsdaten werden zur weiteren Auswertung an die Auswertevorrichtung 30 weitergegeben. Besonders vorteilhaft lassen sich mittels positionsabhängiger Vermessung und Auswertung einer Untersuchungsoberfläche 34 mehrdimensionale, insbesondere zumindest zweidimensionale Karteninformationen 20 und/oder bildhafte Repräsentationen von zumindest zweidimensionalen Karteninformationen 20 in Form zumindest einer Karte 22 (vgl. insbesondere Figur 4) erzeugen.

Auf einem Trägerelement 48 des Ortungsgeräts 10, insbesondere einer Systemplatine oder einer Leiterplatte innerhalb des Gehäuses 12, sind weitere Komponenten des Ortungsgeräts 10, insbesondere die erste Ortungsvorrichtung 38a und die zweite Ortungsvorrichtung 38b, die Steuervorrichtung 32, die Auswertevorrichtung 30 sowie eine mit der Steuervorrichtung 32 und/oder der Auswertevorrichtung 30 verbundene Datenkommunikationsschnittstelle 50 und eine Speichervorrichtung 52 untergebracht (siehe insbesondere Figur 2 und Figur 3).

Die Steuervorrichtung 32 weist eine Steuerelektronik umfassend Mittel zur Kommunikation mit den anderen Komponenten des Ortungsgeräts 10 auf, beispielsweise Mittel zur Steuerung und/oder Regelung der ersten Ortungsvorrichtung 38a und der zweiten Ortungsvorrichtung 38b sowie Mittel zur Steuerung des Ortungsgeräts 10. Die Steuervorrichtung 32 umfasst insbesondere eine nicht näher dargestellte Einheit mit einer Prozessoreinheit, einer Speichereinheit und einem in der Speichereinheit gespeicherten Betriebsprogramm.

Die Auswertevorrichtung 30 ist mit der ersten Ortungsvorrichtung 38a sowie der weiteren, zweiten Ortungsvorrichtung 38b zur Übertragung von zumindest Ortungsdaten verbunden. Darüber hinaus ist die Auswertevorrichtung 30 mit dem Positionssensor 46 zur Übermittlung von Positionsdaten verbunden. Die Auswertevorrichtung 30 weist zumindest einen Prozessor und einen nicht näher dargestellten Speicher mit einem darauf gespeicherten und ausführbaren Betriebsprogramm auf. Ferner ist die Auswertevorrichtung 30 mit der Datenkommunikationsschnittstelle 50 und der Anzeigevorrichtung 18, insbesondere dem Anzeigeelement 16, signaltechnisch verbunden. Die Auswertevorrichtung 30 ist dazu vorgesehen, durch Zuordnung von Ortungsdaten einer ersten Kategorie der ersten Ortungsvorrichtung 38a - d.h. die Existenz von unter einer Untersuchungsoberfläche 34 verborgenen Ortungsobjekten 36 betreffenden Ortungsdaten - zu Positionsdaten eine erste zumindest zweidimensionalen Karteninformation 20a zu bestimmen. Die erste zumindest zweidimensionale Karteninformation 20a betrifft daher die positionsaufgelöste Information über die Existenz von Ortungsobjekten 36 (vgl. insbesondere Figur 6a) unter einer Untersuchungsoberfläche 34. Des Weiteren ist die Auswertevorrichtung 30 dazu vorgesehen, eine weitere, zweite, von der ersten zumindest zweidimensionalen Karteninformation 20a unterschiedliche, zumindest zweidimensionale Karteninformationen 20b durch Zuordnung von Ortungsdaten der zweiten Kategorie der ersten Ortungsvorrichtung 38a - d.h. die Ortungstiefe von unter einer Untersuchungsoberfläche 34 verborgenen Ortungsobjekten 36 betreffenden Ortungsdaten - zu Positionsdaten zu bestimmen. Die zweite zumindest zweidimensionale Karteninformation 20b betrifft daher die positionsaufgelöste Information über die Ortungstiefe von Ortungsobjekten 36, d.h. die Tiefe, in der Ortungsobjekte 36 unter einer Untersuchungsoberfläche 34 verborgen liegen (vgl. insbesondere Figur 6b). Darüber hinaus ist die Auswertevorrichtung 30 ist dazu vorgesehen, durch Zuordnung von Ortungsdaten der zweiten Ortungsvorrichtung 38b, insbesondere Ortungsdaten der ersten Kategorie der zweiten Ortungsvorrichtung 38b - d.h. die Existenz von unter einer Untersuchungsoberfläche 34 verborgenen Wechselstrom führenden Ortungsobjekten 36 betreffenden Ortungsdaten - zu Positionsdaten eine weitere, dritte zumindest zweidimensionalen Karteninformation 20c zu bestimmen. Die dritte zumindest zweidimensionale Karteninformation 20c betrifft daher die positionsaufgelöste Information über die Existenz von unter einer Untersuchungsoberfläche 34 verborgenen Wechselstrom führenden Ortungsobjekten 36 (vgl. insbesondere Figur 6c), d.h. insbesondere Leitungen 36".

Die Auswertevorrichtung 30 weist ferner Auswerteroutinen zur Aufbereitung und/oder Analyse von Ortungsdaten auf, insbesondere Regelroutinen, Steuerroutinen, Analyseroutinen, Berechnungsroutinen, Zuordenroutinen, Umrechnungsroutinen, statistische Auswerteroutinen, Filter, und dergleichen. Bevorzugt weist die Auswertevorrichtung 30 Auswerteroutinen auf, die zumindest Bildbearbeitungsalgorithmen und spektrale Filter aufweisen. Mittels Auswertung von Ortungsdaten können die von einer Ortungsvorrichtung 38a,38b bereitgestellten Messdaten und/oder Messsignale hinsichtlich interessierender Informationen gezielt untersucht werden, sodass anschließend interpretierte und/oder aufbereitete Ortungsdaten, insbesondere Informationen, beispielsweise Richtungsinformationen, Ja-/Nein-Informationen, Materialinformationen, Bewertungsinformationen oder dergleichen zu unter der Untersuchungsoberfläche 34 verborgenen Ortungsobjekten 36 verfügbar sind.

Die Auswertevorrichtung 30 kann ferner durch Zuordnung derartiger ausgewerteter Ortungsdaten der ersten Ortungsvorrichtung 38a und/oder der zweiten Ortungsvorrichtung 38b zu Positionsdaten weitere zumindest zweidimensionale Karteninformationen 20d bestimmen (vgl. insbesondere Figur 6d). Eine solche zumindest zweidimensionale Karteninformationen 20d, die ausgewertete und somit gezielt aufbereitete Ortungsdaten umfasst, stellt eine besonders intuitiv verständliche Information zu unter der Untersuchungsoberfläche 34 verborgenen Ortungsobjekten 36 dar.

Die Auswertevorrichtung 30 ist dazu vorgesehen, mehrere zumindest zweidimensionale Karteninformationen 20, hier am Beispiel der zumindest zweidimensionale Karteninformationen 20a-d, zu einer gemeinsamen Karteninformation 20e,f zu kombinieren. Diese Kombination führt bevorzugt zu einer Anreicherung, insbesondere einer Überlagerung und Fusion der der Kombination zu Grunde gelegten zumindest zweidimensionalen Karteninformationen 20a-d zu einer gemeinsamen Karteninformation 20e,f. Die gemeinsame Karteninformation 20e,f beinhaltet bevorzugt die in den jeweiligen zu Grunde gelegten zumindest zweidimensionalen Karteninformationen 20a-d enthaltenen Ortungsinformationen, sodass eine vorteilhaft umfassende Karteninformation 20e,f erzeugt wird. Auf diese Weise ist eine Kombination von die Ortung betreffenden Informationen möglich, die auf unterschiedliche Weise ermittelt werden. Es sei darauf hingewiesen, dass die der Kombination zu Grunde zu legenden zumindest zweidimensionalen Karteninformationen 20 wählbar sind, insbesondere von einem Benutzer des Ortungsgeräts 10 wählbar sind. In den Figuren 6e und 6f werden als Ausführungsbeispiele die zumindest zweidimensionalen Karteninformationen 20a und 20c bzw. 20a und 20d zu jeweils einer gemeinsamen zumindest zweidimensionalen Karteninformation 20e bzw. 20f kombiniert. Alternativ oder zusätzlich sind auch andere Kombinationsmöglichkeiten denkbar, beispielsweise eine Kombination der zumindest zweidimensionalen Karteninformationen 20a mit 20b oder 20b mit 20c oder 20b mit 20d oder dergleichen.

Auswerteergebnisse, insbesondere aus den Ortungsdaten und Positionsdaten abgeleitete zumindest zweidimensionale Karteninformationen 20a-c, bevorzugt auch aus ausgewerteten Ortungsdaten und Positionsdaten abgeleitete zumindest zweidimensionale Karteninformationen 20d, besonders bevorzugt auch durch Kombination mehrerer zumindest zweidimensionaler Karteninformationen 20a-d erzeugte zumindest zweidimensionale Karteninformationen 20e-f, werden von der Auswertevorrichtung 30 zur weiteren Verarbeitung über die Steuervorrichtung 32 entweder an die Speichervorrichtung 52 oder zur Versendung der Daten an die Datenkommunikationsschnittstelle 50 oder direkt an einen Benutzer des Ortungsgeräts 10 ausgegeben. Eine Ausgabe an einen Benutzer erfolgt dabei mittels der Anzeigevorrichtung 18, d.h. durch Darstellung der zumindest zweidimensionalen Karteninformation 20a-f in Form einer Karte 22a-f auf dem Anzeigeelement 16. Die Ausgabe auf dem Anzeigeelement 16 erfolgt bevorzugt grafisch, numerisch und/oder alphanumerisch, beispielsweise in Form eines Messwerts, einer Messkurve, eines Signalverlaufs, eines Zeitverlauf, als Bilddaten, in einer Gradientendarstellung, mittels Symbolik sowie in einer Kombination derer (vgl. insbesondere Figur 6). Besonders bevorzugt ist eine Darstellung der zumindest zweidimensionalen Karteninformationen 20a-f in Form einer Karte 22a-f vorgesehen.

Die Auswertevorrichtung 30 und die Anzeigevorrichtung 18 sind dazu vorgesehen, durch eine hohe Verarbeitungsrate bzw. Darstellungsrate bei einem Benutzer des Ortungsgeräts 10 den Eindruck zu erwecken, dass Ortungsdaten für einen mit dem Ortungsgerät 10 überfahrenen Bereich unmittelbar, bevorzugt in Echtzeit, ausgewertet und als Karteninformation 20 bereitgestellt bzw. als Karte 22 dargestellt werden. Dazu beträgt die geräteinterne Verarbeitungsdauer durch die Auswertevorrichtung 30 und die Anzeigevorrichtung 18 weniger als 2 Sekunden, bevorzugt weniger als 1 Sekunde, besonders bevorzugt weniger als 0.5 Sekunden.

Der Benutzer kann nach Aufsetzen des Ortungsgeräts 10 auf der Untersuchungsoberfläche 34 das Ortungsgerät 10 während des Betriebs entlang der Untersuchungsoberfläche 34 bewegen, insbesondere verschieben oder verfahren. Dies wird in Figur 4a und 4c durch Pfeile angedeutet, die einen Pfad 56 einer Umpositionierung des Ortungsgeräts 10 andeuten. Dieser Pfad 56 kann in der in Figur 4c dargestellten Ausführungsform als Aneinanderreihung von senkrecht zueinander ausgerichteten Teilpfaden 56' entsprechen. Bezogen auf eine zu untersuchende Wand 40' können diese Teilpfade 56' beispielsweise horizontal und vertikal verlaufen. In einer bevorzugten, benutzerfreundlichen und besonders intuitiven Ausführungsform, kann das Ortungsgerät 10 auch frei über die Untersuchungsoberfläche 34 bewegt werden (hier nicht näher dargestellt). Besonders vorteilhaft ist in dieser Ausführungsform eine Bewegung entlang eines vorgegebenen, insbesondere starren, Pfads 56' nicht nötig. Somit kann der Benutzer in einer frei ausführbaren Wischbewegung das Ortungsgerät 10 über die Untersuchungsoberfläche 34 führen und die Untersuchungsoberfläche 34 auf einfache und intuitive Weise untersuchen. Die freie Wischbewegung des Ortungsgeräts resultiert dann in einem freien, insbesondere beliebig ausgestalteten Pfad 56, der unabhängig ist von einem vorgegebenen Raster oder einer vorgegebenen Spur für die Bewegung oder den Verfahrweg. In Folge des Umpositionierens, insbesondere des Verfahrens oder Verschiebens des Ortungsgeräts 10 auf der Untersuchungsoberfläche 34, wird eine Positionsänderung des Ortungsgeräts 10 in Form von Positionsdaten zur weiteren Auswertung an die Auswertevorrichtung 30 weitergegeben. Mittels positionsabhängiger Vermessung und Auswertung von Ortungsdaten lassen sich, wie in Figur 4b und Figur 4d dargestellt, sukzessiv zumindest zweidimensionale Karteninformationen 20 erzeugen. Bevorzugt wird die zumindest zweidimensionale Karteninformationen 20 in Form einer Karte 22 in Echtzeit, d.h. sukzessiv entsprechend der Umpositionierung des Ortungsgeräts 10 bezogen auf die Untersuchungsoberfläche 34, erzeugt und dargestellt. Die Anzeigevorrichtung 18 ist dazu vorgesehen, den angezeigten Ausschnitt der Karte 22 in Abhängigkeit von Positionsdaten des Ortungsgeräts bezogen auf die Untersuchungsoberfläche 34 zu variieren. Ferner ist die Anzeigevorrichtung 18 dazu vorgesehen, den angezeigten Ausschnitt der Karte 22 zu skalieren, insbesondere in Abhängigkeit von den Positionsdaten zu skalieren.

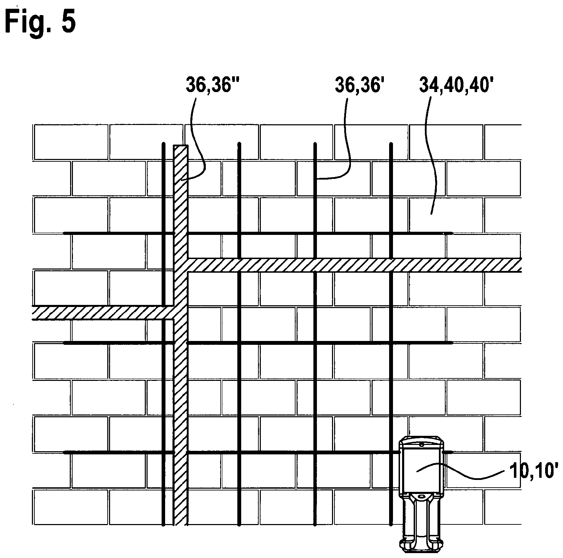

In Figur 5 ist eine exemplarische Ausgestaltung eines zu untersuchenden Werkstücks 40 anhand einer typischen Wand 40' dargestellt. In der Wand 40' verborgen befinden sich unterschiedliche Ortungsobjekte 36, insbesondere Armierungsstäbe 36' sowie elektrische Leitungen 36". Möchte ein Benutzer des Ortungsgeräts 10 Informationen über die unter der Untersuchungsoberfläche 34 verborgenen Ortungsobjekte 36 erhalten, so setzt er das Ortungsgerät 10 auf die Untersuchungsoberfläche 34 auf und beginnt einen Ortungsvorgang. Während des Ortungsvorgangs verfährt der Benutzer das Ortungsgerät 10 sukzessiv über die Untersuchungsoberfläche 34 (vgl. Figuren 4a und 4c).

Figur 6 zeigt verschiedene exemplarische Ausführungsformen von für die in Figur 5 dargestellte Wand 40' erhaltenen zumindest zweidimensionalen Karteninformationen 20a-f in Form von mittels der Anzeigevorrichtung 18 dargestellten Karten 22a-f. In Figur 6a und Figur 6b sind eine erste zumindest zweidimensionale Karteninformation 20a betreffend die Existenz von Ortungsobjekten 36 sowie eine zweite zumindest zweidimensionale Karteninformation 20b betreffend die Ortungstiefe von Ortungsobjekten 36 in Form von Karten 22a bzw. 22b dargestellt. Unter Verwendung dieser beispielhaften Karten 22a,22b lassen sich die in der Wand 40' verborgenen Armierungsstäbe 36' orten, deren Position entnehmen sowie eine Tiefe der Armierungsstäbe 36' in der Wand ermitteln. Es sei darauf hingewiesen, dass die Ortungsvorrichtung 38a nicht auf Wechselstromführende Leitungen 36" sensitiv ist, diese in den zugehörigen zumindest zweidimensionalen Karteninformationen 20a,20b bzw. Karten 22a,22b nicht enthalten sind (Anmerkung: natürlich kann das Metall der Leitung detektiert werden, wird hier aber auf Grund der Übersichtlichkeit weggelassen). In Figur 6a sind die Armierungsstäbe 36' in der Graustufendarstellung der Karte 22a als dunkle Strukturen erkennbar, während in der Karte 22b die Armierungsstäbe 36' als helle Strukturen erkennbar sind. In der Karte 22a entsprechen die Graustufen unterschiedlichen Signalstärken, mit denen Ortungsobjekte geortet werden. Je dunkler das Grau, umso stärker ist ein Ortungssignal an dieser Messposition. In der Karte 22b entsprechen die Graustufen unterschiedlichen Tiefen, in denen Ortungsobjekte geortet werden. Beispielsweise mag das helle Grau der Armierungsstäbe 36' einer Tiefe von 8 cm entsprechen. Generell kann auch vorgesehen sein, ein quantitatives Ablesen der mittels einer Karte 22a-f wiedergegebenen Information mittels einer in einer Karte 22a-f eingeblendeten Farbskala (hier nicht näher dargestellt), insbesondere einer Legende, in der Farbwerte zu quantitativen Größen zugeordnet sind, zu ermöglichen.

In Figur 6c ist eine dritte zumindest zweidimensionale Karteninformation 20c betreffend die Existenz von unter der Untersuchungsoberfläche 34 verborgenen Wechselstrom führenden Ortungsobjekten 36, insbesondere Leitungen 36", in Form einer Karte 22c dargestellt. Unter Verwendung dieser beispielhaften Karte 22c lassen sich die in der Wand 40' verborgenen Wechselstrom führenden Leitungen 36", insbesondere Stromleitungen, auffinden sowie deren Position entnehmen. In Figur 6c sind die Leitungen 36" als gepunktete Strukturen erkennbar, wobei diese Darstellung ebenfalls einer Graustufendarstellung der Karte 22c entspricht. Vorteilhaft kann ein Verlauf der Leitungen 36" der Karte 22c besonders einfach entnommen werden.

In Figur 6d ist eine vierte zumindest zweidimensionale Karteninformation 20d dargestellt, die synthetische Daten umfasst. Die synthetischen Daten wurden dabei in Folge einer Auswertung der der Figur 6c zu Grunde liegenden Ortungsdaten der zweiten Ortungsvorrichtung 38b durch die Auswertevorrichtung 30 erzeugt und stellen eine vereinfachte Repräsentation der Wechselstrom führenden Leitungen 36" in Form von Linien 60 dar. Insbesondere sind unter Anwendung einer Auswerteroutine zur Erkennung von Mitten georteter Strukturen die Mitten der georteten Leitungen 36" durch die Linie 60 wiedergegeben. Ferner sind Gefahrensymbole 58 in die Karte 22d integriert, die einem Benutzer des Ortungsgeräts 10 die von den Wechselstrom führenden Leitungen 36" ausgehende Gefahr deutlich aufzeigen. Insbesondere sind der Karte 22d die Verläufe und die zusammenhängende Struktur der Wechselstrom führenden Leitungen 36" deutlich entnehmbar, sodass die Darstellung der zumindest zweidimensionale Karteninformation 20d auf wesentliche wichtige Informationen reduziert ist. Eine Interpretation der Ortungsergebnisse durch den Benutzer des Ortungsgeräts kann somit deutlich erleichtert werden.

In Figur 6e und Figur 6f sind Karten 22e bzw. 22f dargestellt, in denen je zwei zumindest zweidimensionale Karteninformationen kombiniert sind. Insbesondere sind in der Figur 6e die den Karten 22a und 22c zu Grunde liegenden zumindest zweidimensionalen Karteninformationen 20a und 20c kombiniert bzw. fusioniert. In der Figur 6f sind hingegen die den Karten 22a und 22d zu Grunde liegenden zumindest zweidimensionalen Karteninformationen 20a und 20d kombiniert bzw. fusioniert. Es sei angemerkt, dass die Karte 22e der Figur 6e die Ortungsdaten - insbesondere die zumindest zweidimensionalen Karteninformationen - der ersten und der zweiten Ortungsvorrichtung 38a und 38b ohne zwischengeschaltete spezifische Auswertung durch die Auswertevorrichtung 30 repräsentiert. In der Figur 6f hingegen fließen in die dargestellte gemeinsame Karte 22f zum einen die Ortungsdaten der zweiten Ortungsvorrichtung 38b - insbesondere die zumindest zweidimensionale Karteninformation 20d - durch Auswertung, beispielsweise mittels des Algorithmus zum Erkennen von Mitten georteter Strukturen, vereinfacht und als synthetische Struktur, insbesondere als Linie 60, überlagert mit Gefahrensymbolen 58, ein. Zum anderen fließen die Ortungsdaten der ersten Ortungsvorrichtung 38a - insbesondere die zumindest zweidimensionale Karteninformation 20a - ohne zwischengeschaltete spezifische Auswertung durch die Auswertevorrichtung 30 ein. Die Ausgabe der in den Figuren 6a bis 6f dargestellten Karten 22a-f an den Benutzer des Ortungsgeräts 10 erfolgt auf dem Anzeigeelement 16 der Anzeigevorrichtung 18 des Ortungsgeräts 10.

Ferner sind eine Vielzahl weiterer Ausführungsbeispiele von Karten 22 denkbar, die zumindest zweidimensionale Karteninformationen 20 betreffen, die Aussagen über Signalstärken (beispielsweise für jede einzelne Ortungsvorrichtung 38 oder kombiniert für mehrere Ortungsvorrichtungen 38), über Phasen (beispielsweise Phase einer induktiven Ortungsvorrichtung 38 und/oder einer mittels Radar arbeitenden Ortungsvorrichtung 38), über Materialien, über detektierte bzw. berechnete Mitten und/oder Kanten von Ortungsobjekten 36 oder dergleichen beinhalten. Insbesondere kann in einem Ausführungsbeispiel eine weitere zumindest zweidimensionale Karteninformation 20 auch mittels einer Kamera als Ortungsvorrichtung 38 aufgenommene Bilder der Untersuchungsoberfläche 34 umfassen. In einem weiteren Ausführungsbeispiel sind Karten 22 denkbar, die mittels Kombination von zumindest zweidimensionalen Karteninformationen 20 betreffend Signalstärken und Materialien erzeugt werden. Eine dargestellte Karte 22 könnte beispielsweise Signalstärken in Graustufen darstellen, während zuordenbare Materialien von Ortungsobjekten 36 als eingefärbte Elemente und/oder Bereiche gekennzeichnet sind. Alternativ oder zusätzlich kann eine Kombination der zumindest zweidimensionalen Karteninformationen 20 auch derart erfolgen, dass eine Karte 22 erzeugt wird, die Signalstärken mit einer mittels einer Kamera erzeugten bildhaften Darstellung der Untersuchungsoberfläche 34 überlagert. Insbesondere können dabei unterschiedliche Transparenzwerte verwendet werden, um zu kennzeichnen, an welchen Positionen bezogen auf die Untersuchungsoberfläche 34 bereits zumindest zweidimensionale Karteninformationen 20 vorliegen. So bedeutet beispielsweise eine Transparenz, dass an der entsprechenden Position keine Karteninformation 20 vorliegt. Alternativ oder zusätzlich ist eine Karte 22g denkbar, in der eine zumindest zweidimensionale Karteninformation 20g (nicht näher dargestellt) mit einer weiteren zumindest zweidimensionale Karteninformation 20h (nicht näher dargestellt) kombiniert dargestellt wird, wobei die zweite zumindest zweidimensionale Karteninformation 20h durch Hochpassfilterung aus der zumindest zweidimensionalen Karteninformation 20g erhalten wird. Derart kann vorteilhaft eine besondere Betonung und/oder Hervorhebung von Kanten in der ausgegebenen Karte 22g erfolgen.

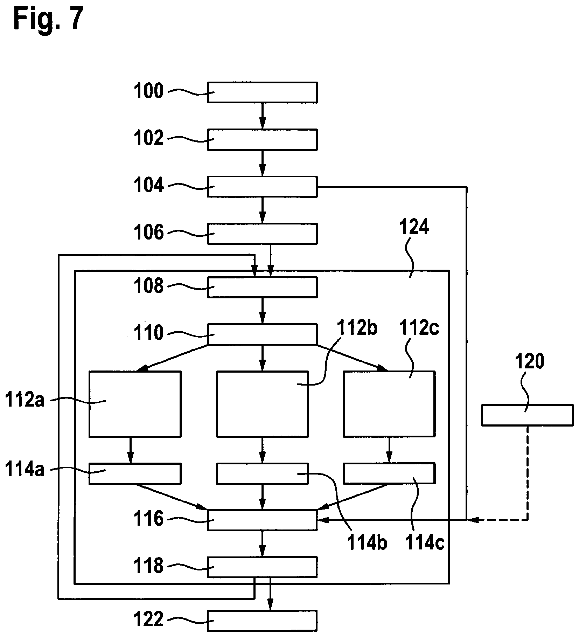

Im Folgenden wird anhand der Figur 7 die Funktionsweise und Bedienung, insbesondere das dem Betrieb des bildgebenden Ortungsgeräts 10 zu Grunde liegende Verfahren, in einer beispielhaften Ausführungsform erläutert. Der Beschreibung liegt das Szenario zu Grunde, dass ein Benutzer des Ortungsgeräts 10 eine Gebäudewand 40' auf verborgene Ortungsobjekte 36, insbesondere beispielsweise Armierungen 36' und elektrische Leitungen 36", untersuchen möchte. Mit Einschalten des Ortungsgeräts 10 über ein Betätigungselement 14 führt das Ortungsgerät 10 zunächst eine Kalibrierung der funktionalen Komponenten des Ortungsgeräts 10 durch (Verfahrensschritt 100). Die Kalibrierung dient der Inbetriebnahme der funktionalen Komponenten des Ortungsgeräts 10, unter anderem dem Auslesen der internen Speichervorrichtung 52, dem Laden von Betriebsroutinen, der Initialisierung der Ortungsvorrichtungen 38a und 38b, der Auswertevorrichtung 30 sowie des Positionssensors 46. Bei dieser Inbetriebnahme befindet sich das Ortungsgerät 10 vorzugsweise in der Hand des Benutzers frei in der Luft, d.h. insbesondere ohne Kontakt zu einer Untersuchungsoberfläche 34. Anschließend ist das Ortungsgerät 10 einsatzbereit und befindet sich in einem Wartezustand. Der Benutzer des Ortungsgeräts 10 setzt das Ortungsgerät 10 mit der dafür vorgesehenen Geräterückseite 26 an einer beliebigen Stelle auf die zu untersuchende Untersuchungsoberfläche 34 der Wand 40' auf. Dabei drückt der Benutzer das Ortungsgerät 10 leicht derart gegen die Wand 40', dass ein unabsichtliches Verrutschen und/oder Verwackeln des Ortungsgeräts 10 auf der Wand 40' vermieden wird. Das Aufsetzen des Ortungsgeräts erfolgt in Verfahrensschritt 102. Anschließend wählt der Benutzer des Ortungsgeräts 10 die zur Ausgabe in Form einer gemeinsamen Karte 22 (wie hier beispielsweise 22e,22f) gewünschten zumindest zweidimensionalen Karteninformationen 20a-d (Verfahrensschritt 104). Diese Wahl kann jederzeit durch den Benutzer geändert werden, angedeutet durch Verfahrensschritt 120. Anschließend bestätigt der Benutzer den Beginn eines Ortungsvorgangs mittels eines Betätigungselements 14, in Folge dessen die Ortungsvorrichtungen 38a und 38b sowie der Positionssensor 46 in Betrieb genommen werden. Fortan ist das Ortungsgerät 10 betriebsbereit und befindet sich in einem Leerlaufmodus (Verfahrensschritt 106). Nun kann der Benutzer das Ortungsgerät 10 über die Untersuchungsoberfläche 34 verfahren (Verfahrensschritt 108), wobei eine Umpositionierung des Ortungsgeräts 10 durch den Positionssensor 46 detektiert wird (Verfahrensschritt 110) und Positionsdaten an die Auswertevorrichtung 30 ausgegeben werden. Gleichzeitig oder kurz nacheinander führen die zwei Ortungsvorrichtungen 38a und 38b in deren jeweiligem Erfassungsbereich 42a bzw. 42b eine Ortung durch (Verfahrensschritt 112a,112b,112c), wobei mittels der ersten Ortungsvorrichtung 38a Ortungsdaten zweier unterschiedlicher Kategorien in Verfahrensschritten 112a,112b ermittelt werden. Die ermittelten Ortungsdaten werden anschließend an die Auswertevorrichtung 30 weitergeleitet, von der sie in Verfahrensschritt 114a,114b,114c weiterverarbeitet werden. Die Weiterverarbeitung erfolgt zumindest im Rahmen der Bestimmung von zumindest zweidimensionalen Karteninformationen 20a-d durch Zuordnung von Ortungsdaten zu Positionsdaten. Ferner kann die Weiterverarbeitung auch eine Aufbereitung und/oder Analyse von Ortungsdaten, insbesondere mittels Regelroutinen, Steuerroutinen, Analyseroutinen, Berechnungsroutinen, Zuordenroutinen, Umrechnungsroutinen, statistische Auswerteroutinen, Filter, und dergleichen, umfassen. In Verfahrensschritt 116 werden die von der Auswertevorrichtung 30 bestimmten zumindest zweidimensionalen Karteninformationen 20a-d zu einer gemeinsamen Karteninformation 20e,f kombiniert. Die kombinierte gemeinsame Karteninformation 20e,f wird anschließend an die Anzeigevorrichtung 18 weitergeleitet, von der sie zur Darstellung mittels des Anzeigeelements 16 in Form einer Karte 22e,f aufbereitet und anschließend an den Benutzer des Ortungsgeräts 10 ausgegeben wird (Verfahrensschritt 118). Entsprechend der in Verfahrensschritt 104 und/oder 120 durch den Benutzer des Ortungsgeräts 10 gewählten interessierenden Karteninformation erfolgt eine unterschiedliche Auswertung von Ortungsdaten sowie eine unterschiedliche Darstellung der Karte 22. So kann beispielsweise jede der in Figur 6 dargestellten Karten 22a-f sowie auch beliebige Kombinationen derer als gemeinsame Karte 22 an einen Benutzer des Ortungsgeräts 10 ausgegeben werden.

Die in dem Kasten (entsprechend Kennzeichen 124) als Ortungsvorgang zusammengefassten Verfahrensschritte werden wiederholt durchlaufen (Andeutung durch Pfeil), sodass bei sukzessiver Umpositionierung des Ortungsgeräts 10 bezogen auf die Untersuchungsoberfläche 34 eine sich sukzessiv zusammensetzende Karte 22 mit den vom Benutzer ausgewählten Inhalten ausgegeben wird. Über Eingabe des Benutzers kann der Ortungsvorgang in Verfahrensschritt 122, insbesondere beispielsweise mit Ausschalten des Ortungsgeräts 10, beendet werden.

Es sei angemerkt, dass die Erfindung nicht auf die Verwendung einer LCR-Antenne sowie einer AC-Antenne beschränkt ist. Prinzipiell kann das Ortungsgerät 10 zur Ortung der unter einer Untersuchungsoberfläche 34 verborgenen Ortungsobjekte 36 auch mit einer oder mehreren anderen, insbesondere auf anderen Messverfahren basierenden, Ortungsvorrichtungen 38, beispielsweise einer einen Induktivsensor, einen Kapazitivsensor, einen Mikrowellensensor, einen Terahertzsensor, einen Ultrahochfrequenzsensor, einen Röntgensensor, einen Infrarotsensor, einen NMR-Sensor, oder dergleichen aufweisenden Ortungsvorrichtung 38 realisiert sein.

## Patentansprüche

1. Bildgebendes Ortungsgerät (10,10'), insbesondere handgehaltenes Ortungsgerät (10'), mit zumindest
- einer ersten Ortungsvorrichtung (38,38a), die dazu vorgesehen ist, Ortungsdaten zu unter einer Untersuchungsoberfläche (34) verborgenen Ortungsobjekten (36,36',36") zu erfassen,
- einem Positionssensor (46) zur Erfassung von Positionsdaten des Ortungsgeräts (10,10') bezogen auf die Untersuchungsoberfläche (34), wobei die Positionsdaten auch Daten umfassen, die eine Orientierung des Ortungsgeräts (10,10') bezogen auf die Untersuchungsoberfläche (34) beschreiben,
- einer Auswertevorrichtung (30), die dazu vorgesehen ist, durch Zuordnung von Ortungsdaten einer ersten Kategorie der ersten Ortungsvorrichtung (38,38a) zu Positionsdaten eine erste zumindest zweidimensionalen Karteninformation (20,20a) zu bestimmen, wobei die Auswertevorrichtung (30) dazu vorgesehen ist, zumindest eine weitere, von der ersten zumindest zweidimensionalen Karteninformation (20,20a) unterschiedliche zumindest zweidimensionale Karteninformation (20,20b,20c,20d) zu bestimmen,
- einer Anzeigevorrichtung (18), die dazu vorgesehen ist, die erste zumindest zweidimensionale Karteninformation (20,20a) und/oder die zumindest eine weitere zumindest zweidimensionale Karteninformation (20,20b,20c,20d) als Karte (22,22a,22b,22c,22d) darzustellen,
- wobei die Anzeigevorrichtung (18) dazu vorgesehen ist, die erste zumindest zweidimensionale Karteninformation (20,20a) und die zumindest eine weitere zumindest zweidimensionale Karteninformation (20,20b,20c,20d) zu einer gemeinsamen Karte (22,22e,22f) zu überlagern,
***dadurch gekennzeichnet, dass*** die Anzeigevorrichtung (18) dazu vorgesehen ist, die dargestellte Karte (22,22a,22b,22c,22d) bei einer Drehung des Ortungsgeräts (10, 10') auf der Untersuchungsoberfläche (34) entgegen der Richtung der Drehbewegung zu rotieren, sodass die dargestellte Karte (22,22a,22b,22c,22d) auch unter Drehung des Ortungsgeräts (10, 10') die unter der Untersuchungsoberfläche (34) georteten Ortungsobjekte (36,36', 36") unabhängig von der Orientierung auf der Untersuchungsoberfläche (34) lagegetreu wiedergibt.

2. Bildgebendes Ortungsgerät (10,10') nach Anspruch 1, **dadurch gekennzeichnet, dass** die Auswertevorrichtung (30) dazu vorgesehen ist, zumindest eine weitere zumindest zweidimensionale Karteninformation (20,20b,20c,20d) durch Zuordnung von Ortungsdaten zumindest einer weiteren Kategorie zu Positionsdaten zu bestimmen.

3. Bildgebendes Ortungsgerät (10,10') nach einem der Ansprüche 1-2, **dadurch gekennzeichnet, dass** die Auswertevorrichtung (30) dazu vorgesehen ist, zumindest eine weitere zumindest zweidimensionale Karteninformation (20,20b,20c,20d) durch Zuordnung von Ortungsdaten zumindest einer weiteren Ortungsvorrichtung (38,38b) zu Positionsdaten zu bestimmen.

4. Bildgebendes Ortungsgerät (10,10') nach einem der Ansprüche 1-3, **dadurch gekennzeichnet, dass** die Auswertevorrichtung (30) dazu vorgesehen ist, zumindest eine weitere zumindest zweidimensionale Karteninformation (20,20b,20c,20d) durch Zuordnung ausgewerteter Ortungsdaten der ersten Ortungsvorrichtung (38,38a) und/oder zumindest einer weiteren Ortungsvorrichtung (38,38b) zu Positionsdaten zu bestimmen.

5. Bildgebendes Ortungsgerät (10,10') nach Anspruch 1-4, **dadurch gekennzeichnet, dass** die Auswertevorrichtung (30) dazu vorgesehen ist, Ortungsdaten der ersten Ortungsvorrichtung (38,38a) und/oder zumindest einer weiteren Ortungsvorrichtung (38,38b) unter Anwendung von Bildbearbeitungsalgorithmen und/oder elektronischen Filtern und/oder digitalen Filtern, insbesondere spektralen Filtern, auszuwerten.

6. Bildgebendes Ortungsgerät (10,10') nach einem der Ansprüche 1-5, **dadurch gekennzeichnet, dass** die Auswertevorrichtung (30) dazu vorgesehen ist, die erste zumindest zweidimensionale Karteninformation (20,20a) und die zumindest eine weitere zumindest zweidimensionale Karteninformation (20,20b,20c,20d) in Echtzeit zu bestimmen.

7. Bildgebendes Ortungsgerät (10,10') nach einem der Ansprüche 1-6, **dadurch gekennzeichnet, dass** die zumindest eine Anzeigevorrichtung (18) dazu vorgesehen ist, die erste zumindest zweidimensionale Karteninformation (20,20a) und/oder die zumindest eine weitere zumindest zweidimensionale Karteninformation (20,20b,20c,20d) als synthetische Elemente aufweisende Karte (22,22d), insbesondere Linien (60), Striche, gefüllte Polygone, schraffierte Polygone, teilweise transparente Polygone, Symbole aufweisende Karte (22,22d), darzustellen.

8. Bildgebendes Ortungsgerät (10,10') nach einem der Ansprüche 1-7, **dadurch gekennzeichnet, dass** die Auswertevorrichtung (30) dazu vorgesehen ist, die erste zumindest zweidimensionale Karteninformation (20,20a) und die zumindest eine weitere zumindest zweidimensionale Karteninformation (20,20b,20c,20d) zu einer gemeinsamen Karteninformation (20,20e,20f) zu kombinieren.

9. Verfahren zum Betrieb eines bildgebenden Ortungsgeräts (10,10'), bei dem durch Ortung von unter einer Untersuchungsoberfläche (34) verborgenen Ortungsobjekten (36,36',36") mittels einer ersten Ortungsvorrichtung (38,38a) und unter Verwendung von mittels eines Positionssensors (46) erfasster Positionsdaten des Ortungsgeräts (10,10') bezogen auf die Untersuchungsoberfläche (34), wobei die Positionsdaten auch Daten umfassen, die eine Orientierung des Ortungsgeräts (10,10') bezogen auf die Untersuchungsoberfläche (34) beschreiben, durch Zuordnung von Ortungsdaten einer ersten Kategorie der ersten Ortungsvorrichtung (38,38a) zu Positionsdaten eine erste zumindest zwei-dimensionale Karteninformation (20,20a) unter Verwendung einer Auswertevorrichtung (30) des Ortungsgeräts (10,10') erzeugt wird, wobei unter Verwendung der Auswertevorrichtung (30) zumindest eine weitere, von der ersten zumindest zweidimensionalen Karteninformation (20,20a) unterschiedliche zumindest zweidimensionale Karteninformation (20,20b,20c,20d) bestimmt wird, wobei mittels einer Anzeigevorrichtung (18) des Ortungsgeräts (10,10') die erste zumindest zweidimensionale Karteninformation (20,20a) und/oder die zumindest eine weitere zumindest zweidimensionale Karteninformation (20,20b,20c,20d) als Karte (22,22a,22b,22c,22d) dargestellt wird, wobei mittels der Anzeigevorrichtung (18) die erste zumindest zweidimensionale Karteninformation (20,20a) und die zumindest eine weitere zumindest zweidimensionale Karteninformation (20,20b,20c,20d) zu einer gemeinsamen Karte (22,22e,22f) überlagert werden, ***dadurch gekennzeichnet, dass*** die dargestellte Karte (22,22a,22b,22c,22d) bei einer Drehung des Ortungsgeräts (10, 10') auf der Untersuchungsoberfläche (34) entgegen der Richtung der Drehbewegung rotiert wird, sodass die dargestellte Karte (22,22a,22b,22c,22d) auch unter Drehung des Ortungsgeräts (10, 10') die unter der Untersuchungsoberfläche (34) georteten Ortungsobjekte (36,36', 36") unabhängig von der Orientierung auf der Untersuchungsoberfläche (34) lagegetreu wiedergibt.

## Claims

1. Imaging locating device (10, 10'), more particularly a hand-held locating device (10'), comprising at least
- a first locating apparatus (38, 38a), provided to detect locating data in relation to objects to be located (36, 36', 36") which are concealed under an examination surface (34),
- a position sensor (46) for detecting position data of the locating device (10, 10') in relation to the examination surface (34), wherein the position data also comprise data describing an orientation of the locating device (10, 10') in relation to the examination surface (34),
- an evaluation apparatus (30), provided to determine a first at least two-dimensional map information item (20, 20a) by assigning locating data of a first category from the first locating apparatus (38, 38a) to position data, wherein the evaluation apparatus (30) is provided to determine at least one further at least two-dimensional map information item (20, 20b, 20c, 20d) which differs from the first at least two-dimensional map information item (20, 20a),
- a display apparatus (18), which is provided to display the first at least two-dimensional map information item (20, 20a) and/or the at least one further at least two-dimensional map information item (20, 20b, 20c, 20d) as a map (22, 22a, 22b, 22c, 22d),
- wherein the display apparatus (18) is provided to overlay the first at least two-dimensional map information item (20, 20a) and the at least one further at least two-dimensional map information item (20, 20b, 20c, 20d) to form a common map (22, 22e, 22f),
**characterized in that** in the case of a rotation of the locating device (10, 10') on the examination surface (34) the display apparatus (18) is provided to rotate the displayed map (22, 22a, 22b, 22c, 22d) counter to the direction of the rotational movement, so that even in the case of a rotation of the locating device (10, 10') and independently of the orientation of the examination surface (34) the displayed map (22, 22a, 22b, 22c, 22d) faithfully reproduces the objects to be located (36, 36', 36") which are located under the examination surface (34) .

2. Imaging locating device (10, 10') according to Claim 1, **characterized in that** the evaluation apparatus (30) is provided to determine at least one further at least two-dimensional map information item (20, 20b, 20c, 20d) by assigning locating data of at least one further category to position data.

3. Imaging locating device (10, 10') according to either of Claims 1 and 2, **characterized in that** the evaluation apparatus (30) is provided to determine at least one further at least two-dimensional map information item (20, 20b, 20c, 20d) by assigning locating data from at least one further locating apparatus (38, 38b) to position data.

4. Imaging locating device (10, 10') according to any one of Claims 1 to 3, **characterized in that** the evaluation apparatus (30) is provided to determine at least one further at least two-dimensional map information item (20, 20b, 20c, 20d) by assigning evaluated locating data from the first locating apparatus (38, 38a) and/or at least one further locating apparatus (38, 38b) to position data.

5. Imaging locating device (10, 10') according to Claims 1 to 4, **characterized in that** the evaluation apparatus (30) is provided to evaluate locating data from the first locating apparatus (38, 38a) and/or at least one further locating apparatus (38, 38b) by applying image processing algorithms and/or electronic filters and/or digital filters, in particular spectral filters.

6. Imaging locating device (10, 10') according to any one of Claims 1 to 5, **characterized in that** the evaluation apparatus (30) is provided to determine the first at least two-dimensional map information item (20, 20a) and the at least one further at least two-dimensional map information item (20, 20b, 20c, 20d) in real time.

7. Imaging locating device (10, 10') according to any one of Claims 1 to 6, **characterized in that** the at least one display apparatus (18) is provided to display the first at least two-dimensional map information item (20, 20a) and/or the at least one further at least two-dimensional map information item (20, 20b, 20c, 20d) as a map (22, 22d) having synthetic elements, in particular as a map (22, 22d) having lines (60), dashes, filled polygons, shaded polygons, partly transparent polygons and/or symbols.

8. Imaging locating device (10, 10') according to any one of Claims 1 to 7, **characterized in that** the evaluation apparatus (30) is provided to combine the first at least two-dimensional map information item (20, 20a) and the at least one further at least two-dimensional map information item (20, 20b, 20c, 20d) to form a common map information item (20, 20e, 20f) .

9. Method for operating an imaging locating device (10, 10'), in which a first at least two-dimensional map information item (20, 20a) is generated using an evaluation apparatus (30) of the locating device (10, 10') by locating, by means of the first locating apparatus (38, 38a), objects to be located (36, 36', 36") which are concealed under an examination surface (34), and by using position data of the locating device (10, 10'), captured by means of the position sensor (46), in relation to the examination surface (34), wherein the position data also comprise data describing an orientation of the locating device (10, 10') in relation to the examination surface (34) by assigning locating data of a first category of the locating apparatus (38, 38a) to position data, wherein at least one further at least two-dimensional map information item (20, 20b, 20c, 20d) which differs from the first at least two-dimensional map information item (20, 20a) is determined using the evaluation apparatus (30), wherein the at least one two-dimensional map information item (20, 20a) and/or the at least one further at least two-dimensional map information item (20, 20b, 20c, 20d) is displayed as a map (22, 22a, 22b, 22c, 22d) by means of a display apparatus (18) of the locating device (10, 10'), wherein the first at least two-dimensional map information item (20, 20a) and the at least one further at least two-dimensional map information item (20, 20b, 20c, 20d) are overlaid by means of the display apparatus (18) to form a common map (22, 22e, 22f), **characterized in that** in the case of a rotation of the locating device (10, 10') on the examination surface (34) the displayed map (22, 22a, 22b, 22c, 22d) is rotated counter to the direction of the rotational movement, so that even in the case of a rotation of the locating device (10, 10') and independently of the orientation of the examination surface (34) the displayed map (22, 22a, 22b, 22c, 22d) faithfully reproduces the objects to be located (36, 36', 36") which are located under the examination surface (34) .

## Revendications

1. Appareil de localisation et d'imagerie (10, 10'), en particulier appareil de localisation à main (10'), comprenant au moins
- un premier dispositif de localisation (38, 38a) qui est prévu pour acquérir des données de localisation relatives à des objets de localisation (36, 36', 36") cachés sous une surface d'examen (34),
- un capteur de position (46) destiné à acquérir des données de position de l'appareil de localisation (10, 10') par rapport à la surface d'examen (34), les données de position comprenant également des données qui décrivent une orientation de l'appareil de localisation (10, 10') par rapport à la surface d'examen (34),
- un dispositif d'évaluation (30) qui est prévu pour déterminer une première information cartographique au moins bidimensionnelle (20, 20a) par association de données de localisation d'une première catégorie du premier dispositif de localisation (38, 38a) à des données de position, le dispositif d'évaluation (30) étant prévu pour déterminer au moins une autre information cartographique au moins bidimensionnelle (20, 20b, 20c, 20d) différente de la première information cartographique au moins bidimensionnelle (20, 20a),
- un dispositif d'affichage (18) qui est prévu pour représenter la première information cartographique au moins bidimensionnelle (20, 20a) et/ou l'au moins une autre information cartographique au moins bidimensionnelle (20, 20b, 20c, 20d) sous la forme d'une carte (22, 22a, 22b, 22c, 22d),
- le dispositif d'affichage (18) étant prévu pour superposer la première information cartographique au moins bidimensionnelle (20, 20a) et l'au moins une autre information cartographique au moins bidimensionnelle (20, 20b, 20c, 20d) pour former une carte commune (22, 22e, 22f),
**caractérisé en ce que** le dispositif d'affichage (18) est prévu pour faire tourner la carte représentée (22, 22a, 22b, 22c, 22d), pendant la rotation de l'appareil de localisation (10, 10'), dans le sens inverse du mouvement de rotation sur la surface d'examen (34),
de sorte que la carte représentée (22, 22a, 22b, 22c, 22d) reproduise fidèlement en position, même lorsque l'appareil de localisation (10, 10') tourne, les objets de localisation (36, 36', 36") localisés sous la surface d'examen (34) indépendamment de l'orientation sur la surface d'examen (34).

2. Appareil de localisation et d'imagerie (10, 10') selon la revendication 1, **caractérisé en ce que** le dispositif d'évaluation (30) est prévu pour déterminer au moins une autre information cartographique au moins bidimensionnelle (20, 20b, 20c, 20d) par association de données de localisation d'au moins une autre catégorie à des données de position.

3. Appareil de localisation et d'imagerie (10, 10') selon l'une des revendications 1 et 2, **caractérisé en ce que** le dispositif d'évaluation (30) est prévu pour déterminer au moins une autre information cartographique au moins bidimensionnelle (20, 20b, 20c, 20d) par association de données de localisation d'au moins un autre dispositif de localisation (38, 38b) à des données de position.

4. Appareil de localisation et d'imagerie (10, 10') selon l'une des revendications 1 à 3, **caractérisé en ce que** le dispositif d'évaluation (30) est prévu pour déterminer au moins une autre information cartographique au moins bidimensionnelle (20, 20b, 20c, 20d) par association de données de localisation évaluées du premier dispositif de localisation (38, 38a) et/ou d'au moins un autre dispositif de localisation (38, 38b) à des données de position.

5. Appareil de localisation et d'imagerie (10, 10') selon les revendications 1 à 4, **caractérisé en ce que** le dispositif d'évaluation (30) est prévu pour évaluer des données de localisation du premier dispositif de localisation (38, 38a) et/ou d'au moins un autre dispositif de localisation (38, 38b) à l'aide d'algorithmes de traitement d'images et/ou de filtres électroniques et/ou de filtres numériques, notamment de filtres spectraux.

6. Appareil de localisation et d'imagerie (10, 10') selon l'une des revendications 1 à 5, **caractérisé en ce que** le dispositif d'évaluation (30) est prévu pour déterminer la première information cartographique au moins bidimensionnelle (20, 20a) et l'au moins une autre information cartographique au moins bidimensionnelle (20, 20b, 20c, 20d) en temps réel.

7. Appareil de localisation et d'imagerie (10, 10') selon l'une des revendications 1 à 6, **caractérisé en ce que** l'au moins un dispositif d'affichage (18) est prévu pour représenter la première information cartographique au moins bidimensionnelle (20, 20a) et/ou l'au moins une autre information cartographique au moins bidimensionnelle (20, 20b, 20c, 20d) sous la forme d'une carte (22, 22d) comportant des éléments synthétiques, en particulier une carte (22, 22d) comportant des lignes (60), des traits, des polygones pleins, des polygones hachurés, des polygones partiellement transparents, des symboles.

8. Appareil de localisation et d'imagerie (10, 10') selon l'une quelconque des revendications 1 à 7, **caractérisé en ce que** le dispositif d'évaluation (30) est fourni pour combiner la première information cartographique au moins bidimensionnelle (20, 20a) et l'au moins une autre information cartographique au moins bidimensionnelle (20, 20b, 20c, 20d) pour former une information cartographique commune (20, 20e, 20f).

9. Procédé de fonctionnement d'un appareil de localisation et d'imagerie (10, 10'), procédé dans lequel une première information cartographique au moins bidimensionnelle (20, 20a) est générée à l'aide d'un dispositif d'évaluation (30) de l'appareil de localisation (10, 10') par localisation d'objets de localisation (36, 36', 36") cachés sous une surface d'examen (34) au moyen d'un premier dispositif de localisation (38, 38a) et à l'aide de données de position, acquise par un capteur de position (46), de l'appareil de localisation (10, 10') par rapport à la surface d'examen (34), les données de position comprenant également des données qui décrivent une orientation de l'appareil de localisation (10, 10') par rapport à la surface d'examen (34), par association de données de localisation d'une première catégorie du premier dispositif de localisation (38, 38a) à des données de position, au moins une autre information cartographique au moins bidimensionnelle (20, 20b, 20c, 20d) différente de la première information cartographique au moins bidimensionnelle (20, 20a) étant déterminée à l'aide du dispositif d'évaluation (30), la première information cartographique au moins bidimensionnelle (20, 20a) et/ou l'au moins une autre information cartographique au moins bidimensionnelle (20, 20b, 20c, 20d) étant représentée sous la forme d'une carte (22, 22a, 22b, 22c, 22d) au moyen d'un dispositif d'affichage (18) de l'appareil de localisation (10, 10'), la première information cartographique au moins bidimensionnelle (20, 20a) et l'au moins une autre information cartographique au moins bidimensionnelle (20, 20b, 20c, 20d) étant superposées au moyen du dispositif d'affichage (18) pour former une carte commune (22, 22e, 22f), **caractérisé en ce que** la carte représentée (22, 22a, 22b, 22c, 22d) est mise en rotation dans le sens inverse du mouvement de rotation sur la surface d'examen (34) lors de la rotation de l'appareil de localisation (10, 10'), de sorte que la carte représentée (22, 22a, 22b, 22c, 22d) reproduit fidèlement en position les objets de localisation (36, 36', 36") situés sous la surface d'examen (34) indépendamment de l'orientation sur la surface d'examen (34) même lors de la rotation du dispositif de localisation (10, 10').
